(19) Europäisches Patentamt / European Patent Office / Office européen des brevets

(11) **EP 3 598 060 A1**

(12) **EUROPEAN PATENT APPLICATION**
published in accordance with Art. 153(4) EPC

(43) Date of publication:
22.01.2020 Bulletin 2020/04

(51) Int Cl.:
*G01B 11/06* (2006.01)     *G01N 21/27* (2006.01)
*G01N 21/45* (2006.01)

(21) Application number: 18805680.8

(22) Date of filing: 20.04.2018

(86) International application number:
**PCT/JP2018/016264**

(87) International publication number:
**WO 2018/216410 (29.11.2018 Gazette 2018/48)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: 26.05.2017 JP 2017104415

(71) Applicant: **Konica Minolta, Inc.**
**Tokyo 100-7015 (JP)**

(72) Inventors:
• **NINOMIYA Hidetaka**
  **Tokyo 100-7015 (JP)**
• **NAKAMURA Yukito**
  **Tokyo 100-7015 (JP)**
• **KAYA Takatoshi**
  **Tokyo 100-7015 (JP)**

(74) Representative: **Gille Hrabal**
**Brucknerstrasse 20**
**40593 Düsseldorf (DE)**

(54) **MEASUREMENT DEVICE**

(57)     It is an object of the present invention to directly measure a transparent thin film sample on a thick film transparent medium with high accuracy.

A measurement device for measuring a sample arranged on a thick film transparent medium, in which a light projecting surface, a light receiving surface, the thick film transparent medium, and a sample are set so as to satisfy the following formula ($\alpha$) for eliminating noise light reflected from a back surface of the thick film transparent medium:

$$h < (L/n3) \cdot \sqrt{((2H/D2) \cdot (2H/D2) - n3 \cdot n3 + 1)} \cdots \text{Formula } (\alpha)$$

(in formula ($\alpha$), h denotes a distance from the light receiving surface to the sample, L denotes a half of an interval between the light projecting surface and the light receiving surface, n3 denotes a refractive index of the thick film transparent medium, H denotes a thickness of the thick film transparent medium, and D2 denotes an aperture of the light receiving surface).

FIG. 10

**Description**

Technical Field

The present invention relates to a measurement device for directly measuring the thickness, a change in the thickness, a reaction measurement, a thermal response, water adsorption, etc. of various measurement objects deployed on a thick film transparent medium used in the field of regenerative medicine without any other optical medium interposed.

Background Art

It is conventionally difficult in the field of regenerative medicine to measure the film thickness of a transparent thin film sample arranged on a Petri dish (thick film transparent medium). In general, as a method of measuring the film thickness of a transparent thin film sample, for example, a film thickness measurement method is known in which the reflection interference spectroscopic measurement of a transparent thin film sample is performed and the film thickness of the transparent thin film sample is measured by conversion into the film thickness. However, in this film thickness measurement method, it is difficult to directly measure the film thickness of a transparent thin film sample arranged on a thick film transparent medium since there is too much optical noise caused by back surface reflection of a commercially available Petri dish or the like.

As a measurement device to measure the film thickness of a transparent thin film sample arranged on a thick film transparent medium using a lens system, a reflectance measurement device is known which is capable of measuring the spectral reflectance of only the transparent thin film sample by eliminating light reflected by the back surface of the thick film transparent medium, through adoption of a special optical system, without performing an antireflection treatment or similar treatment on the back surface of the thick film transparent medium (Non Patent Literature 1). However, although this reflectance measurement device can be used to calculate the film thickness at one point, it is difficult to reproduce the conditions of focus adjustment, and reflection interference components cannot be perfectly extracted, and thus the film thickness of the transparent thin film sample cannot be measured with high accuracy. In addition, continuous measurement of the film thickness cannot performed, nor is it possible to perform measurement in a combined manner in water and the air to measure the film thickness of the transparent thin film sample.

Meanwhile, reflectometric interference spectroscopy (RIfS) is known which is capable of measuring the film thickness of a transparent thin film sample by emitting white light onto a transparent thin film sample formed on a sensor chip and spectrally dispersing and analyzing interference components of the surface-reflected light reflected at the surface of the transparent thin film sample and the bottom surface-reflected light reflected at the bottom surface of the sensor chip applied with the transparent thin film sample by a spectroscope (Patent Literature 1). Since optical fibers are used to receive the surface-reflected light and the bottom surface surface-reflected light in this RIfS, it is not necessary to perform focus adjustment, and it is possible to easily perform continuous measurement of a light interference bottom peak shift that is related to a change in the film thickness of the transparent thin film sample. In addition, in this RIfS, a medium having a refractive index significantly different from that of the transparent thin film sample or a highly coherent SiN substrate is prepared as a sensor chip in order to improve the measurement accuracy, and the transparent thin film sample is formed on the SiN substrate to reduce the noise reflection on the back surface of the transparent thin film sample and to increase interference signals, thereby enabling highly accurate measurement of the film thickness and highly accurate continuous measurement of the film thickness. Note that since a SiN substrate can eliminate the influence of back surface reflection and can amplify interference signals, highly accurate continuous measurement of the film thickness can be performed both in water and in the air by arranging a transparent thin film sample on the SiN substrate.

Citation List

Patent Literature

Patent Literature 1: JP 3786073 B2

Non Patent Literature

Non Patent Literature 1: Olympus Corporation "Industrial Microscope USPM-RU III," Retrieved on April 18, 2017, from http://www.olympus-ims.com/ja/metrology/lens-spectral/uspm-ru3/

Summary of Invention

Technical Problem

However, the above RIfS has disadvantages that a transparent thin film sample needs to be in close contact with the sensor chip and that in a case where the film thickness of the sample exceeds approximately 10 μm, interference signals are attenuated by the sensor chip, thereby hindering acquisition of interference data.

The reflectometric interference spectroscopy using optical fibers also has a disadvantage that it is not possible to directly measure a transparent thin film sample on a thick film transparent medium. This is because reflection interference signals of the transparent thin film sample are buried in reflection noise of a Petri dish and thus cannot be obtained in a case where the transparent thin film sample having a thickness of about several tens of nanometers to several micrometers is arranged on the Petri dish since the thickness of the Petri dish used as the thick film transparent medium is about 1 mm.

An object of the present invention is to provide a measurement device capable of directly measuring a transparent thin film sample on a thick film transparent medium with high accuracy.

Solution to Problem

Prior to completing the present invention, the inventors first conducted the following verification of principles as experiments on which the inventive concept is based. This verification of principles was conducted to find out the reason why no interference signals of a transparent thin film sample on a thick film transparent medium can be obtained when a pan-focus receiving system of optical fibers excellent in continuous measurement is used.

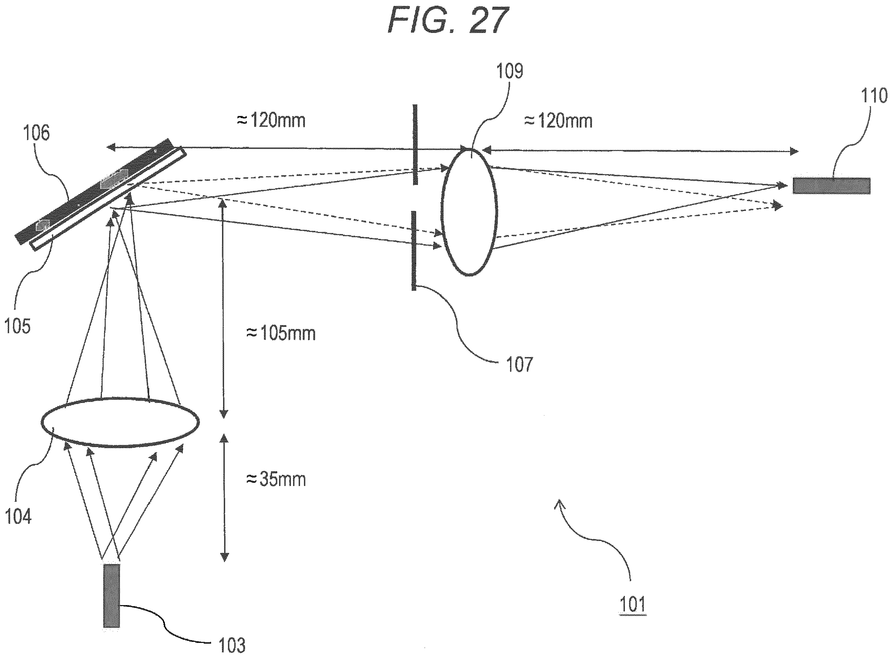

Fig. 27 is a diagram illustrating an optical system 101 used for the verification of principles. As illustrated in Fig. 27, the optical system 101 includes a light projecting optical fiber 103, a first lens 104, a polystyrene Petri dish 105 used as a thick film transparent medium, an iris 107, a second lens 109, and a light receiving optical fiber 110. A reflector 106 is arranged on the bottom surface of the polystyrene Petri dish 105, and gelatin (not illustrated) is arranged on the upper surface of the polystyrene Petri dish 105 as a transparent thin film sample. Note that the optical axis of the light projecting optical fiber 103 and the optical axis of the light receiving optical fiber 110 are arranged to be orthogonal to each other.

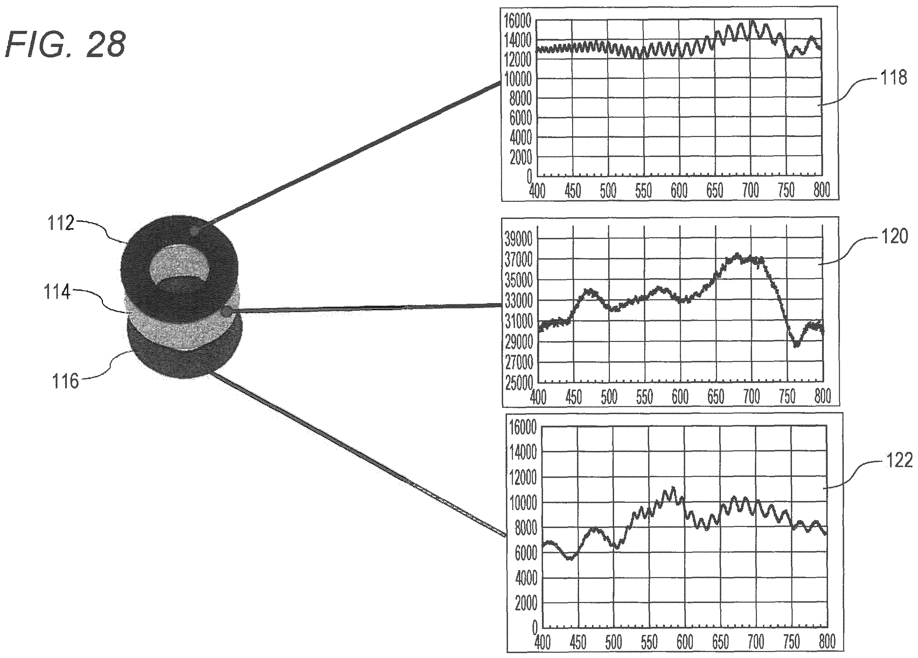

White light was projected from the light projecting optical fiber 103 toward the gelatin using this optical system 101, and beam patterns of interference light of three components were observed on the gelatin as illustrated on the left of Fig. 28.

In the verification of principles, it was found that any one of the beam patterns of interference light of three components can be selectively received by orthogonally arranging the optical axis of the light projecting optical fiber 103 and the optical axis of the light receiving optical fiber 110, arranging the light receiving optical fiber 110 at a position 120 mm away from the second lens 109, and changing the position of the light receiving surface of the light receiving optical fiber 110.

Specifically, it was found that interference light observed as a beam pattern 112 was received and that a spectrum illustrated in a graph 118 in the upper right of Fig. 28 could be obtained in the case where the center position of the light receiving surface of the light receiving optical fiber 110 was arranged 5 mm away from an end close to a projection system of a projected beam. It was also found that interference light observed as a beam pattern 114 was received and that a spectrum illustrated in a graph 120 in the center right of Fig. 28 could be obtained in the case where the center position of the light receiving surface of the light receiving optical fiber 110 was arranged 6 mm away from the end close to the projection system of the projected beam. Similarly, it was also found that interference light observed as a beam pattern 116 was received and that a spectrum illustrated in a graph 122 in the lower right of Fig. 28 could be obtained in the case where the center position of the light receiving surface of the light receiving optical fiber 110 was arranged 8.5 mm away from the end close to the projection system of the projected beam. Note that the graph 118, the graph 120, and the graph 122 illustrate the reflection intensity of each beam of the interference light. The horizontal axes indicate the wavelength of light included in the interference light, and the vertical axes indicate the reflection intensity for each of the wavelengths of light.

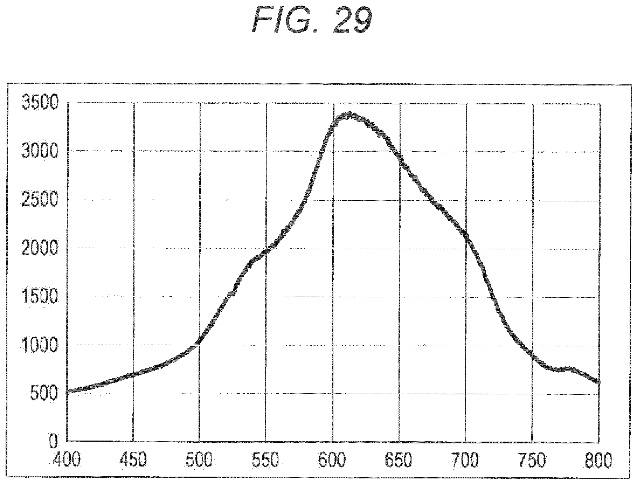

Meanwhile, it was found that, in the case where the spectra of interference light of these three components were combined, that is, in the case where the components were not separated, the phases of the interference signals of the three components were mutually reversed and cancelled each other out and that no surface reflection interference waveform was obtained as illustrated in Fig. 29. That is, in a case where light projected from the optical fiber is specularly reflected by the gelatin arranged on the thick film transparent medium, interference signals cancel each other out, thereby no interference fringes are obtained, and thus no film thickness can be measured.

On the basis of these findings, the inventors have completed the present invention to implement an optimum configuration which ensures that reflection interference signals of a transparent thin film sample not be buried in the reflection noise of a thick film transparent medium and enables separation of interference signals of three components having different phases to prevent the interference signals of the three-components from canceling each other out.

That is, in order to implement at least one of the above-mentioned objects, a measurement device reflecting one aspect of the present invention includes the following.

[1] A measurement device for measuring a sample arranged on a thick film transparent medium, the measurement device including: a light source that emits white light; a light projecting part including a light projecting surface for projecting the white light emitted from the light source toward the sample; a light receiving part including a transmission path including a light receiving surface for receiving reflection interference light which is the white light, having been projected from the light projecting surface, reflected by a surface of the sample and a surface of the thick film transparent medium; a spectroscopic part that detects intensity of light of each certain wavelength interval included in the reflection interference light received by the light receiving surface; and a measurement part that measures the sample on the basis of the detection result of the spectroscopic part, in which the light projecting surface, the light receiving surface, the thick film transparent medium, and the sample are set so as to satisfy the following inequation ($\alpha$) for eliminating noise light reflected from a back surface of the thick film transparent medium.

$$h < (L/n3) \cdot \sqrt{((2H/D2) \cdot (2H/D2) - n3 \cdot n3 + 1)} \cdot \cdot \cdot \text{Inequation } (\alpha)$$

(In inequation ($\alpha$), h denotes a distance from the light receiving surface to the sample, L denotes a half of an interval between the light projecting surface and the light receiving surface, n3 denotes the refractive index of the thick film transparent medium, H denotes a thickness of the thick film transparent medium, and D2 denotes the aperture of the light receiving surface).

Advantageous Effects of Invention

According to the present invention, it is possible to provide a measurement device capable of directly measuring a transparent thin film sample on a thick film transparent medium with high accuracy.

Brief Description of Drawings

Fig. 1 is a schematic diagram illustrating a measurement system according to an embodiment.
Fig. 2 is a view illustrating the relationship between the position and the angle between a separate-axes-system light transmission part and a thick film transparent medium in the measurement system according to the embodiment.
Fig. 3 is a view illustrating the relationship between the position and the angle between a coaxial light transmission part and a thick film transparent medium in the measurement system according to the embodiment.
Fig. 4 is a plan view illustrating a lower end surface of a light transmission part included in a measurement device according to another embodiment.
Fig. 5 includes a perspective view of the thick film transparent medium according to an embodiment as viewed obliquely from above and a view as viewed from the side.
Fig. 6 is a diagram illustrating a beam pattern of interference light appeared on a sample when an experiment was performed using the measurement system according to the embodiment.
Fig. 7 is a diagram illustrating first sample surface reflection interference light according to the embodiment.
Fig. 8 is a diagram illustrating sample surface transmission interference light according to the embodiment.
Fig. 9 is a diagram illustrating second sample surface reflection interference light according to the embodiment.
Fig. 10 is a diagram for explaining specific conditions in the case where the film thickness of a sample is measured without tilting the light transmission part in the measurement system according to the embodiment.
Fig. 11 is a diagram for explaining specific conditions in the case where the film thickness of a sample is measured without tilting the light transmission part in the measurement system according to the embodiment.
Fig. 12 is a diagram for explaining specific conditions in the case where the film thickness of a sample is measured without tilting the light transmission part in the measurement system according to the embodiment.
Fig. 13 is a graph illustrating interference measurement conditions in a theoretical design example 1 according to the embodiment.
Fig. 14 is a graph illustrating interference measurement conditions in the theoretical design example 1 according to the embodiment.
Fig. 15 is a graph illustrating interference measurement conditions in a theoretical design example 2 according to the embodiment.

Fig. 16 is a graph illustrating interference measurement conditions in a theoretical design example 3 according to the embodiment.

Fig. 17 is a graph illustrating interference measurement conditions in the theoretical design example 3 according to the embodiment.

Fig. 18 is a graph illustrating interference measurement conditions in a theoretical design example 4 according to the embodiment.

Fig. 19 is a graph illustrating interference measurement conditions in the theoretical design example 4 according to the embodiment.

Fig. 20 is a graph illustrating interference measurement conditions in a theoretical design example 5 according to the embodiment.

Fig. 21 is a graph illustrating interference measurement conditions in the theoretical design example 5 according to the embodiment.

Fig. 22 is a graph illustrating interference measurement conditions in a theoretical design example 6 according to the embodiment.

Fig. 23 is a graph illustrating interference measurement conditions in the theoretical design example 6 according to the embodiment.

Fig. 24 is a graph illustrating spectra of spectral reflectances obtained in comparative examples 1 to 5 in example 1.

Fig. 25 is a diagram illustrating a spectrum of spectral reflectance obtained in measurement 1 in example 1.

Fig. 26 is a diagram illustrating spectra of spectral reflectances obtained in measurements 2 to 5 in example 1.

Fig. 27 is a diagram illustrating an optical system used for verification of principles.

Fig. 28 is a diagram illustrating beam patterns of interference light appearing on a sample and graphs illustrating reflection intensities of interference light in verification of principles.

Fig. 29 is a diagram illustrating that an interference waveform cannot be obtained when all spectra of interference light are combined.

Description of Embodiments

A measurement device of the present invention includes the followings.

[1] A measurement device for measuring a sample arranged on a thick film transparent medium, the measurement device including: a light source that emits white light; a light projecting part including a light projecting surface for projecting the white light emitted from the light source toward the sample; a light receiving part including a transmission path including a light receiving surface for receiving reflection interference light which is the white light, having been projected from the light projecting surface, reflected by a surface of the sample and a surface of the thick film transparent medium; a spectroscopic part that detects intensity of light of each certain wavelength interval included in the reflection interference light received by the light receiving surface; and a measurement part that measures the sample on the basis of the detection result of the spectroscopic part, in which the light projecting surface, the light receiving surface, the thick film transparent medium, and the sample are set so as to satisfy the following inequation ($\alpha$) for eliminating noise light reflected from a back surface of the thick film transparent medium.

$$h < (L/n3) \cdot \sqrt{((2H/D2) \cdot (2H/D2) - n3 \cdot n3 + 1)} \cdots \text{Inequation } (\alpha)$$

(In inequation ($\alpha$), h denotes a distance from the light receiving surface to the sample, L denotes a half of an interval between the light projecting surface and the light receiving surface, n3 denotes the refractive index of the thick film transparent medium, H denotes a thickness of the thick film transparent medium, and D2 denotes the aperture of the light receiving surface).

[2] The measurement device according to [1], in which the measurement device is set to satisfy the following formulas ($\beta$) for causing reflection light, which has been incident on the sample at an incident angle less than or equal to a numerical aperture of the light projecting part and reflected at a surface of the sample, to be incident on the light receiving part at an incident angle less than or equal to a numerical aperture of the light receiving part:

$$h \geq L/\tan \beta1 \text{ and } h \geq L/\tan \beta2 \cdots \text{Formulas } (\beta)$$

(in formulas (β), β1 denotes the numerical aperture of the light projecting part, and β2 represents the numerical aperture of the light receiving part).

[3] The measurement device according to [1] or [2], in which the measurement device is set to satisfy the following formula (γ) for avoiding a component having an inverted phase from entering a light beam incident on the light receiving surface:

$$|\Delta AA - \Delta BB| = 2 \times n2 \times d \times (2\pi/\lambda) \times |\cos \gamma\theta - \cos \gamma\alpha 1| < \pi \cdots \text{Formula } (\gamma)$$

(in formula (γ), ΔAA denotes a phase difference of the light beam in a shortest optical path, ΔBB denotes a phase difference of the light beam in a longest optical path, n2 denotes a refractive index of the sample, d denotes a film thickness of the sample (mm), denotes a reflection angle in the sample, θ denotes a reflection angle in the shortest optical path, and α1 denotes a reflection angle in the longest optical path).

[4] The measurement device according to any one of [1] to [3], in which an aperture of the light receiving surface is 200 nm, the interval between the light projecting surface and the light receiving surface is 0.2 mm, and the interval between the light receiving surface and the sample is 0.5 mm or more and 0.6 mm or less.

[5] The measurement device according to any one of [1] to [3], in which an aperture of the light receiving surface is 200 nm, the interval between the light projecting surface and the light receiving surface is 0.3 mm or 0.4 mm, and the interval between the light receiving surface and the sample is 0.8 mm or more and 1.0 mm or less.

[6] The measurement device according to any one of [1] to [3], in which an aperture of the light receiving surface is 100 nm, the interval between the light projecting surface and the light receiving surface is 0.2 mm or more and 0.4 mm or less, and the interval between the light receiving surface and the sample is 1.0 mm or more and 2.0 mm or less.

[7] The measurement device according to any one of [1] to [3], in which an aperture of the light receiving surface is 50 nm, the interval between the light projecting surface and the light receiving surface is 0.2 mm or more and 0.4 mm or less, and the interval between the light receiving surface and the sample is 1.0 mm or more and 3.0 mm or less.

[8] The measurement device according to any one of [1] to [7], further including: a single light transmission part that accommodates the light projecting part and the light receiving part, in which the light transmission part projects the white light from the light projecting surface of the light projecting part and receives the reflection interference light by the light receiving surface of the light receiving part.

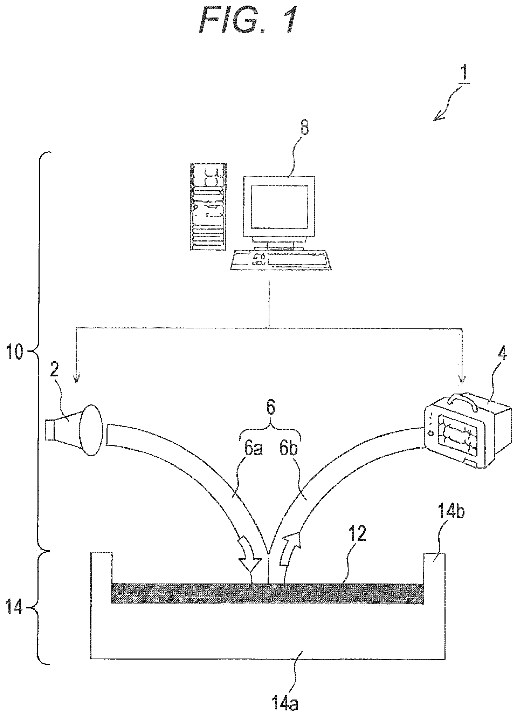

Hereinafter, with reference to the drawings, a measurement system according to an embodiment will be described by taking an example of a measurement system used for measurement of a sample arranged on a thick film transparent medium. Fig. 1 is a schematic diagram illustrating a measurement system according to an embodiment. As illustrated in Fig. 1, a measurement system 1 includes a measurement device 10 including a white light source 2, a spectroscope 4, a light transmission part 6, and a controller 8 and a Petri dish 14 on which a sample 12 to be measured is arranged.

Note that the white light source 2, the spectroscope 4, and the light transmission part 6 are preferably accommodated in the main body of the measurement device 10, and the controller 8 in the form of, for example, a personal computer (PC) is connected to the main body of the measurement device in a controllable manner.

The white light source 2 includes a light source lamp (not illustrated) and a housing (not illustrated) for housing the lamp. The housing has a communication function with the controller 8, and preferably enables adjustment of the light quantity by the controller 8 in a software-based manner. The light source lamp is only required to perform continuous light emission in the visible to near infrared light such as 400 to 800 nm or 400 to 1000 nm. For example, a halogen lamp, a xenon lamp, or a white LED may be used.

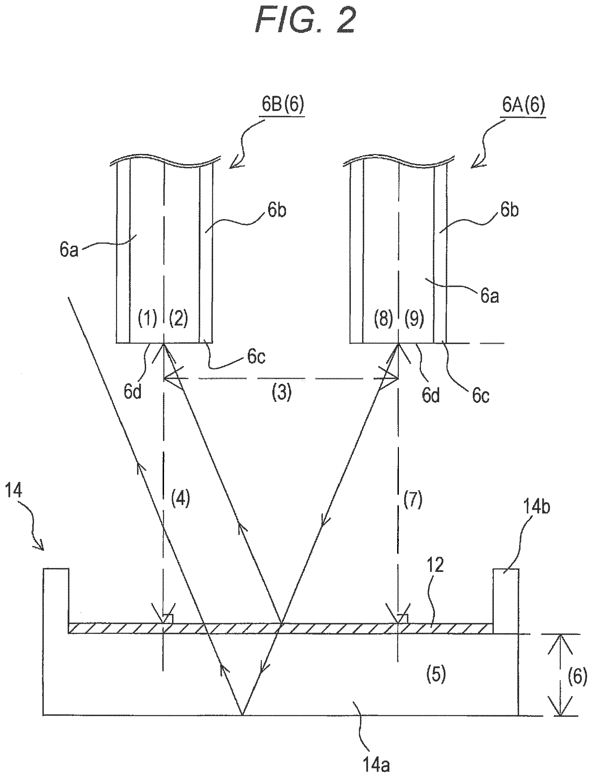

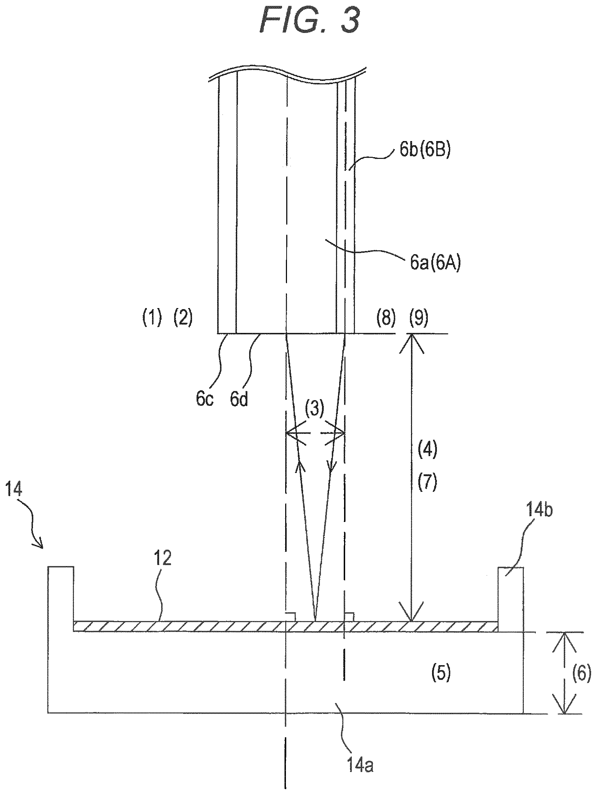

The light transmission part 6 includes a light projecting optical fiber 6a for projecting the white light emitted by the white light source 2 onto the sample 12 and a light receiving optical fiber 6b for receiving reflection interference light of the white light emitted from the light projecting optical fiber 6a and guiding the reflection interference light to the spectroscope 4. Here, there are two types of light transmission parts 6: a light transmission part 6 which separately includes a light-projecting light transmission part 6A and a light-receiving light transmission part 6B (hereinafter referred to as a separate-axes-system light transmission part 6) as illustrated in Fig. 2; and a light transmission part 6 which performs both light projection and light reception by a single light transmission part 6 (hereinafter referred to as a coaxial light transmission part 6) as illustrated in Fig. 3. The light-projecting light transmission part 6A and the light-receiving light transmission part 6B in the separate-axes-system light transmission part 6 are also referred to as a light projecting part 6A and a light receiving part 6B, respectively. Similarly, in the coaxial light transmission part 6, the light projecting optical fiber 6a and the light receiving optical fiber 6b are also referred to as a light projecting part 6A and a light receiving part 6B, respectively. Note that, in the light transmission part 6, a substantially cylindrical light receiving optical fiber 6b as a cladding portion surrounds the substantially cylindrical light projecting optical fiber 6a as a core portion.

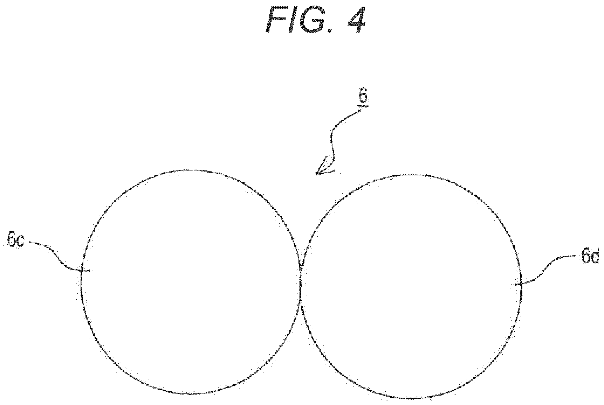

Meanwhile in the separate-axes-system light transmission part 6, the substantially cylindrical light receiving optical fiber 6b may not surround the light projecting optical fiber 6a. For example, the substantially cylindrical light projecting optical fiber 6a and the substantially cylindrical light receiving optical fiber 6b may be bundled. In this case, when the light transmission part 6 is viewed from the lower end surface side, the light receiving surface 6d and the light projecting surface 6c each having a circular shape are adjacent to each other as illustrated in Fig. 4.

In a case where the light projecting optical fiber 6a and the light receiving optical fiber 6b are bundled in this manner, it is possible for the light receiving surface 6d to receive the interference light even if a light receiving angle $\theta 1$ is increased.

Note that the single light transmission part 6 is more preferable as the light transmission part 6 since it is more compact than the separate-axes-system light transmission part 6 and allows surface reflection interference light to be efficiently incident on the light receiving surface 6d.

The spectroscope 4 is an analysis instrument for detecting the intensity of light of each certain wavelength interval included in the light received through the light receiving optical fiber 6b.

The controller 8 has a function of controlling the respective parts of the measurement device 10 in an integrated manner, and receives input of execution of detection operation from an operator, and outputs an execution instruction of the detection operation control to the measurement device 10. The controller 8 also has an operation function of performing an operation on the basis of data acquired from the spectroscope.

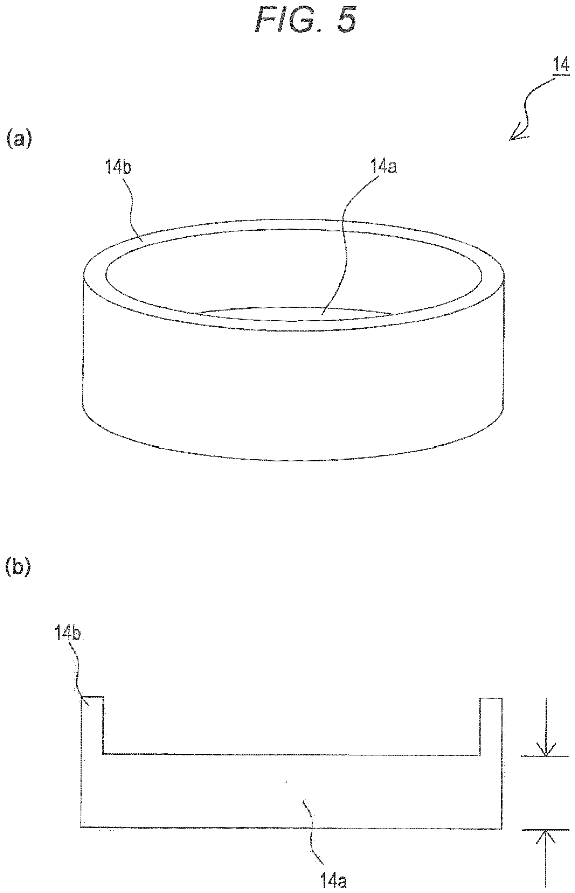

The Petri dish 14 representing the thick film transparent medium includes a cylindrical circumferential wall 14b surrounding a disk 14a as illustrated in Figs. 5(a) and 5(b). Here, the disk 14a has a thickness T of 0.1 to 5.0 mm. The thickness T exceeds the coherence length that prevents light incident from a surface of the disk 14a from causing reflection interference. Note that the thick film transparent medium is not necessarily limited to a Petri dish in the present embodiment, and for example a flask or a microplate which is generally used in the field of regenerative medicine may be used. Incidentally, as a member included in a thick film transparent medium, a transparent member such as that made of polymer materials such as polystyrene, polypropylene, cyclic polyolefin, or polycarbonate, or glass is used. Therefore, a black paper or the like may be arranged on the back surface of the Petri dish 14 to suppress the reflectance of light by the back surface. This can further reduce the light receiving efficiency by the light receiving optical fiber 6b.

The sample 12 is a measurement object made of a transparent material, and is arranged on the surface of the disk 14a as a thin film having a thickness of 1 nm to 100 $\mu$m upon measurement. Here, for example, a scaffold material for regenerative medicine such as gelatin or collagen is used as the sample 12.

Hereinafter, a process of measuring the sample 12 using the measurement device 10 of the embodiment will be described. Note that a case in which collagen is used as the sample 12 and the Petri dish 14 made of polystyrene is used will be described as an example here.

First, an operator places an aqueous solution of the sample 12 on the surface of Petri dish 14 and then evaporates the water to obtain deposit of the sample 12. Alternatively, the sample 12 may be deposited over time after the placement of the aqueous solution. Further alternatively, the Petri dish 14 on which the aqueous solution of the sample 12 is arranged is mounted on a spin coater (not illustrated), and a thin film of the sample 12 is formed on the surface of the Petri dish 14 while the rotation speed of the spin coater is adjusted.

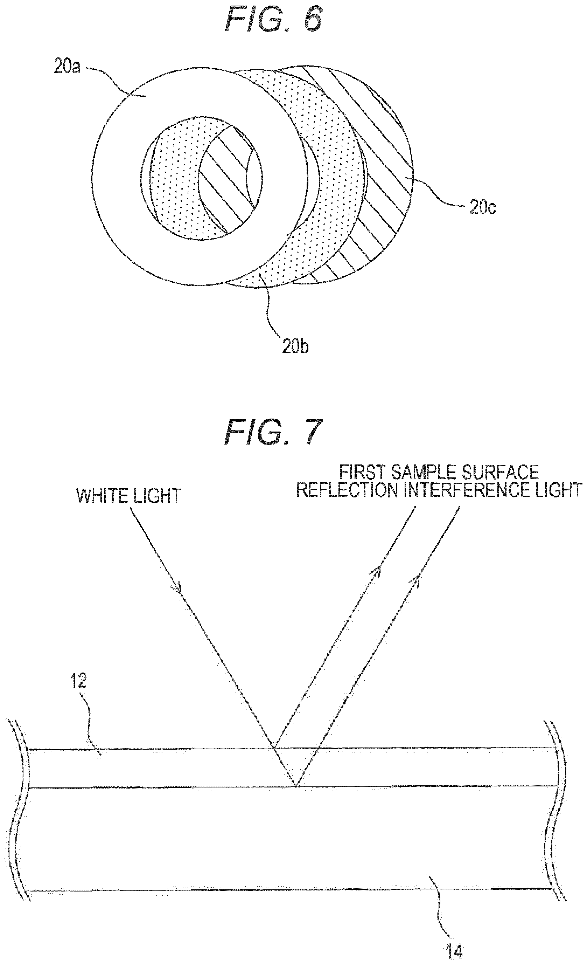

Next, when the Petri dish 14 is arranged at a predetermined position below the light transmission part 6 and the white light source 2 is turned on, white light transmitted through the light projecting optical fiber 6a is emitted from the light projecting surface 6c, and the sample 12 is irradiated with the white light. As a result, a beam pattern 20a of first sample surface reflection interference light, a beam pattern 20b of sample surface transmission interference light, and a beam pattern 20c of second sample surface reflection interference light appears as beam patterns of interference light on the sample 12 as illustrated in Fig. 6. Note that the fact that the beam patterns of each beam of interference light are concentric is because of the fact that the cross-sectional shape of the light projecting optical fiber 6a is concentric.

In the measurement device 10 of the present embodiment, it is possible to spatially separate interference light to be measured from other interference light that becomes noise and to selectively receive the interference light to be measured by appropriately setting the apertures of the light projecting part 6A and the light receiving part 6B, the N/A (numerical aperture) of the light receiving part 6B, the distance between the light projecting part 6A and the light receiving part 6B, the distance between the light projecting part 6A and the Petri dish 14, and the distance between the light receiving part 6B and the Petri dish 14. This prevents a plurality of interference waves of the different phases from being combined and canceling each other out, and thus it is possible to measure the film thickness of the sample 12 and changes in the film thickness with high accuracy.

Here, each beam of interference light will be described. As illustrated in Fig. 7, the first sample surface reflection interference light is obtained by interference between the reflection light reflected by the front surface of the sample 12 and the reflection light first transmitted through the sample 12 and then reflected by the front surface of the Petri dish 14. Note that the first sample surface reflection interference light has the largest contrast as compared with other interference light, and is easy to perform film thickness conversion.

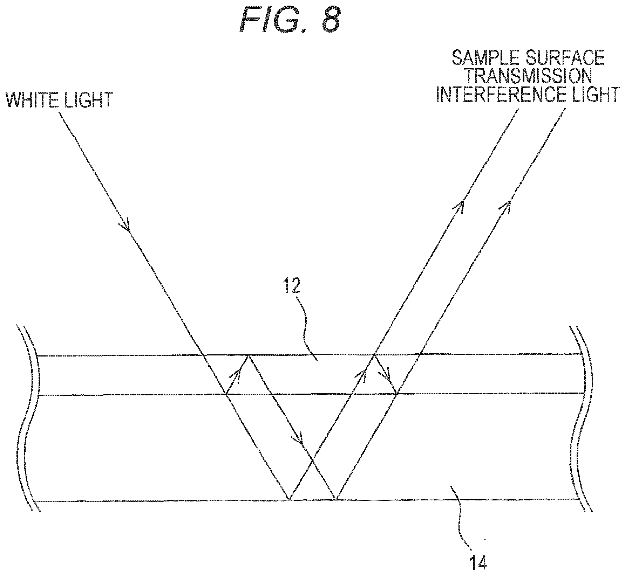

Meanwhile, the sample surface transmission interference light is obtained by interference among the reflection light reflected by the bottom surface of the Petri dish 14, the reflection light first reflected by the front surface of the Petri dish 14, then at the front surface of the sample 12, and further reflected at the bottom surface of the Petri dish 14, and the interference light first reflected at the bottom surface of the Petri dish 14, then at the front surface of the sample 12, and further reflected at the front surface of the Petri dish 14 as illustrated in Fig. 8.

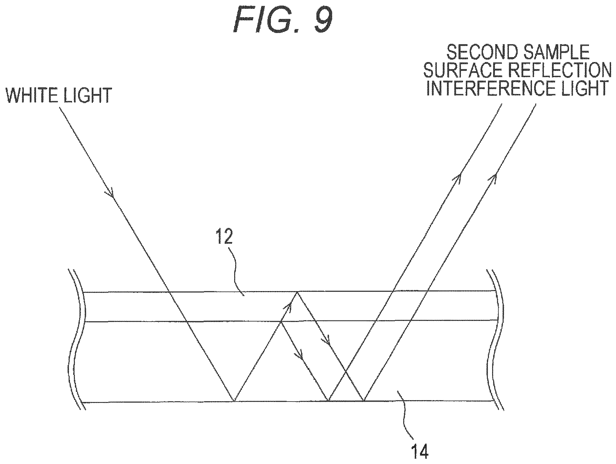

In addition, the second sample surface reflection interference light is obtained by interference between the reflection light first reflected at the bottom surface of the Petri dish 14, then at the front surface of the Petri dish 14, and then again at the bottom surface of the Petri dish 14 and the reflection light first reflected at the bottom surface of the Petri dish 14, then at the front surface of the sample 12, and reflected again at the bottom surface of the Petri dish 14 as illustrated in Fig. 9.

Next, when the interference light incident on the light receiving surface 6d is guided to the spectroscope 4 via the light receiving optical fiber 6b, the spectroscope 4 detects the intensity of light of each certain wavelength interval included in the interference light incident on the light receiving surface 6d and outputs as the spectrum intensity to the controller 8.

The controller 8 acquires data of the spectrum intensity of the interference light from the spectroscope 4 and divides the spectrum intensity of the interference light by the spectrum intensity of the white light serving as a reference to calculate the reflectance for each wavelength band. The spectrum intensity data of the reference light may be measured and held in advance at the time of assembly and adjustment of the measurement device, or may be acquired upon each measurement by other means. The controller 8 generates a reflection interference spectrum on the basis of the calculated reflectance, and determines the bottom (minimum value) and the peak (maximum value) of the reflectance. Then, the controller 8 calculates the film thickness of the sample 12 by substituting the minimum and the maximum wavelengths ($\lambda$) of the reflectance into, for example, a predetermined calculation formula having been simulated in advance. Alternatively, the controller 8 can acquire the amount of change ($\Delta\lambda$) of a measured reflectance minimum or maximum wavelength with respect to a minimum or maximum wavelength of a reference reflectance (baseline). In this case, the amount of change of the film thickness is calculated on the basis of the amount of change ($\Delta\lambda$) of the reflectance minimum wavelength.

According to the measurement system 1 of the present embodiment, it is possible to suppress the reflectance of light at the bottom surface of the Petri dish 14 by appropriately setting the apertures of the light projecting part 6A and the light receiving part 6B, the N/A (numerical aperture) of the light receiving part 6B, the distance between the light projecting part 6A and the light receiving part 6B, the distance between the light projecting part 6A and the Petri dish 14, and the distance between the light receiving part 6B and the Petri dish 14, As a result, the interference light to be measured is not buried in the reflection noise on the bottom surface of the Petri dish 14, and thus the sample 12 arranged on the Petri dish 14 can be directly measured without arranging a special sensor chip on the Petri dish 14. In addition, since the interference light is received using the optical fiber, it is not necessary to adjust the focus every time the film thickness changes, and the sample 12 arranged on the Petri dish 14 can be continuously measured in water and in the air.

Note that although the description has been given using the light projecting optical fiber 6a and the light receiving optical fiber 6b as the transmission paths in the embodiment; however, these are merely examples, and the transmission paths may not necessarily be optical fibers.

Next, conditions for eliminating the noise light reflected from the back surface of the Petri dish 14 to measure the sample 12 in the embodiment will be described.

The main elements of specific conditions include the following (1) to (6) illustrated in Figs. 2 and 3, and light projection conditions (7) to (9) are supplementarily related.

(1) Aperture of the light receiving part 6B
(2) N/A (numerical aperture) of the light receiving part 6B
(3) Distance between the light transmission parts 6
(4) Distance between the light receiving part 6B and the sample 12
(5) Refractive index of the Petri dish 14
(6) Thickness of the Petri dish 14
(7) Distance between the light projecting part 6A and the sample 12
(8) Aperture of the light projecting part 6A
(9) N/A (numerical aperture) of the light projecting part 6A

In this measurement, it is possible to acquire film thickness information of the sample 12 with highly accuracy by allowing only signals to be incident on the Light receiving optical fiber 6b out of light interference components of the sample 12, which are the signals, and transmission reflection components in the Petri dish 14, which are noise. Next, the positional relationship of the light interference signals, the noise, the light projecting part, and the light receiving part will be described. In the case of the separate-axes-system light transmission part 6, although the light projecting optical fiber 6a may be inclined to adjust the amount of incident light in some cases; however, the optical axis does not change in terms of a numerical value in theoretical calculation, and thus it suffices to describe by the aperture of the tip, the positional relationship, etc.

(Light Interference Signal)

First, according to (3), the distance between the light projecting part 6A and the light receiving part 6B, and (4) and (7), the distances from the sample 12, the white light emitted from the light projecting optical fiber 6a is reflected at and the bottom surface and the front surface of the sample 12, the beams of light intersect and interfere with each other, then are reflected at the same angle as that projected onto the sample 12, and enters the light receiving optical fiber 6b.

In reality, since the light transmission part 6 expands as the effective diameter (aperture $\times$ N/A) increases, the smaller the effective diameter of the light transmission part 6 is, the higher the performance of sorting signal components becomes.

(Noise)

Meanwhile, the light transmitted through the Petri dish 14 and reflected from the bottom surface of the Petri dish 14 also has a noise component that cancels out the light interference signal and thus are to be avoided from entering the light receiving optical fiber 6b as much as possible. This noise is refracted depending on the refractive index $\times$ thickness of the Petri dish 14 when transmitted by the Petri dish 14, and is transmitted by the thickness of the Petri dish 14. As for the noise light reflected by the bottom surface of the Petri dish 14, light projection/reception conditions for emission at a position shifted from that of the signal light can be derived from a theoretical formula.

(Positional Relationship Between Light Projecting Part and Light Receiving Part)

When the light receiving optical fiber 6b and the sample 12 are close to each other, although the light utilization efficiency is good, noise components are likely to enter the light receiving optical fiber 6b. When they are too distant from each other, the light interference signal are degraded, and thus a relationship that enables a good balance is necessary. Similarly, the reflection light angles of light projection/reception (determined by the distance between the light projecting part 6A and the light receiving part 6B and the distances from the surface of the sample 12) need to be inclined to some extent to cause light interference. However, if it is too large, the signal light cannot be received.

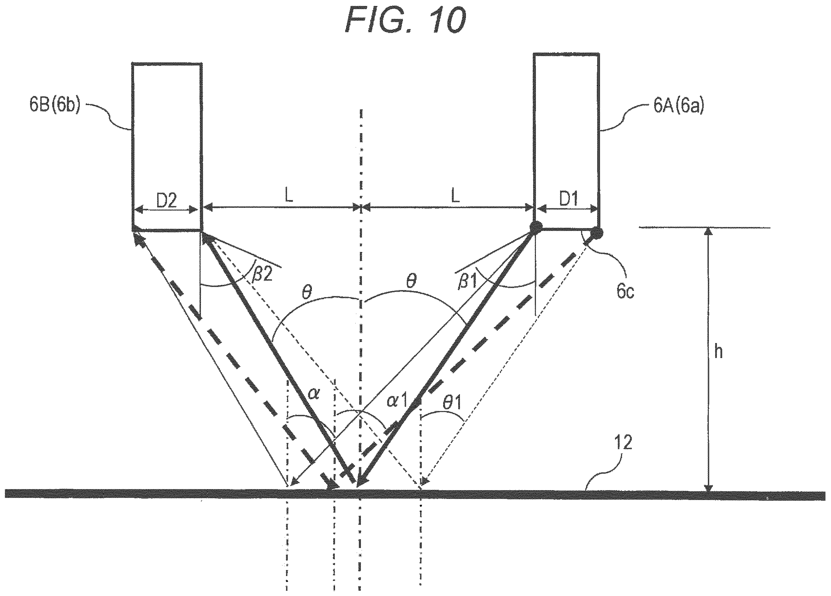

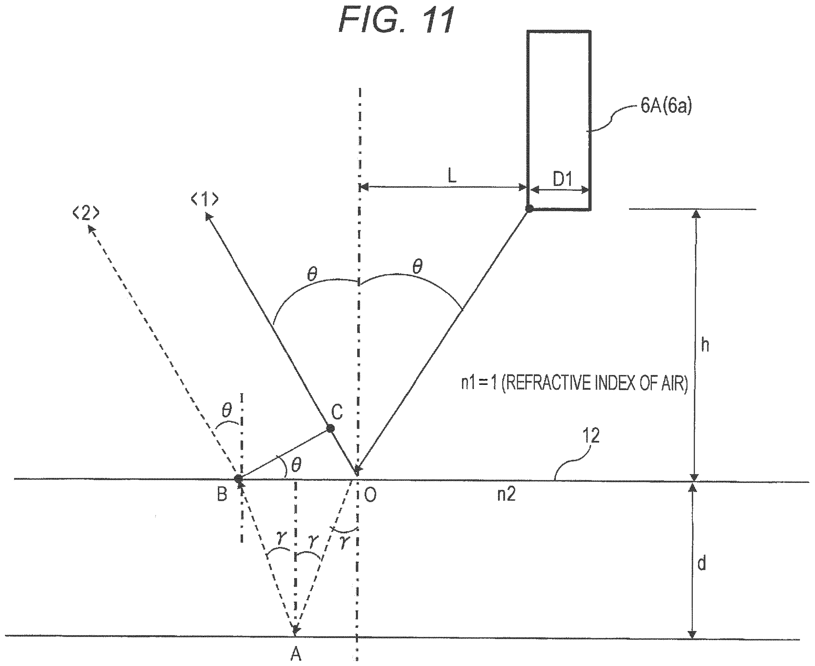

Next, conditions for measurement of film thickness interference fringes of the sample 12 arranged on the Petri dish 14 will be described with reference to Figs. 10 to 12. In order to directly measure the sample 12 arranged on the Petri dish 14, the measurement system 1 that satisfies the following three conditions is required.

Condition 1. The reflection light having been incident on the sample 12 at an incident angle less than or equal to the N/A of the light projecting part 6A and reflected at the front surface thereof enters the light receiving part 6B at an incident angle less than or equal to the light reception N/A.

Condition 2. The reflection light reflected at the bottom surface of the Petri dish 14 do not enter the light receiving part 6B.

Condition 3. A difference $|\Delta A - \Delta B|$ between a phase difference $\Delta A$ of a light beam A in the shortest optical path of the sample 12 and the phase difference $\Delta B$ of the longest optical path difference light beam B of the sample 12 is < $\pi$. That is, there is no component having an inverted phase in the light beam incident on the light receiving part 6B.

Lower limit conditional expressions of the distance h between the light projecting surface 6c/the light receiving surface 6d and the sample 12 (hereinafter referred to as the measurement instrument-measurement plane distance h) are determined from the above Condition 1:

$$h \geq L/\tan\beta1 \text{ and } h \geq L/\tan\beta2 \quad \cdots\cdots <1>.$$

From the above Condition 2, an upper limit conditional expression of the measurement instrument-measurement plane distance h is determined:

$$h < (L/n3) \cdot \sqrt{((2H/D2) \cdot (2H/D2) - n3 \cdot n3 + 1)} \quad \cdots\cdots <5>'''.$$

Furthermore, according to the above condition 3, the distance 2L between the light projecting part 6A and the light receiving part 6B (hereinafter referred to as the light projection-light reception interval 2L), the size D1 of the light projecting part 6A, and the size D2 of the light receiving part 6B are determined. That is, conditions for avoiding a component having an inverted phase from entering a light beam incident on the light receiving surface is determined:

$$|\Delta AA - \Delta BB| = 2 \cdot n2 \cdot d \cdot (2\pi/\lambda) \cdot |\cos \gamma\theta - \cos \gamma\alpha1| < \pi. \quad \cdots\cdots<7>.$$

Note that the contents denoted by the symbols illustrated in Figs. 10 to 12 are as follows.
h: measurement instrument-measurement plane distance, L: distance from the light projecting part 6A or the light receiving part 6B to the midpoint, D1: aperture of the light projecting part 6A, D2: aperture of the light receiving part 6B, $\beta1$: N/A (numerical aperture) of the light projecting part 6A, $\beta2$: N/A of the light receiving part 6B, $\alpha1$: reflection angle in the longest optical path (from far end to far end), $\alpha$: reflection angle from the near end of the light projecting part 6A to the far end of the light receiving part 6B, $\theta$: reflection angle in shortest optical path (middle point, from near end to near end), $\theta1$: reflection angle of a light beam incident from the far end of the light projecting part 6A to the near end of the light receiving part 6B, n1: medium refractive index between the light projecting surface 6c or the light receiving surface 6d and the sample 12 (1 in the atmosphere, 1.33 in the water), n2: refractive index of the sample 12, n3: refractive index in the Petri dish 14, $\gamma$: reflection angle in the sample 12, H: film thickness of the sample 12, $\Delta AA$: phase difference of a light beam in the shortest optical path, and $\Delta BB$: phase difference of a light beam in the longest optical path.
Next, the method of deriving a theoretical formula regarding the conditions for measurement of film thickness interference fringes on the Petri dish 14 will be described in detail.
Lower limit conditional expressions regarding the condition 1 are derived as below.

$$\theta \leq \beta1 \text{ (light projection N/A) and } \theta \leq \beta2 \text{ (light reception N/A)} \cdots\cdots<1>$$

$$\alpha \leq \beta1 \text{ and } \alpha \leq \beta2 \cdots\cdots<2>$$

$$\theta1 \leq \beta1 \text{ and } \theta1 \leq \beta2 \cdots\cdots<3>$$

$$\alpha1 \leq \beta1 \text{ and } \alpha1 \leq \beta2 \cdots\cdots<4>$$

Here,

$$\tan \theta = L/h$$

$$\tan \alpha = (2L + D2)/2h,$$

and

$$\tan \theta1 = (2L + D1)/2h.$$

Substitution of $\tan \alpha1 = (2L + D1 + D2)/2h$ into <1>, <2>, <3>, and <4> leads the following lower limit conditional expressions of h.

$$L/h \leq \tan \beta1 \text{ and } L/h \leq \tan \beta2$$

$$\rightarrow h \geq L/\tan \beta1 \text{ and } h \geq L/\tan \beta2 \cdots\cdots<1>$$

$$h \geq (L + D2/2)/\tan \beta1 \text{ and } h \geq (L + D2/2)/\tan \beta2 \cdots\cdots<2>$$

$$h \geq (L + D1/2)/\tan \beta1 \text{ and } h \geq (L + D1/2)/\tan \beta2 \cdots \cdots <3>$$

$$h \geq (L + (D1 + D2)/2)/\tan \beta1 \text{ and } h \geq (L + (D1 + D2)/2)/\tan \beta2 \cdots \cdots <4>$$

Upper limit conditional expressions regarding the condition 2 are derived as illustrated below.

$$PS > 2L + D2 \cdots \cdots <5>$$

Here,

$$PQ = L = h \cdot \tan \theta$$

$$QR = OB = 2H \cdot \tan \varphi$$

$$RS = h \cdot \tan \theta$$

$$\therefore PS = PQ + QR + RS$$
$$= h \cdot \tan \theta + 2H \cdot \tan \varphi + h \cdot \tan \theta$$
$$= 2 (h \cdot \tan \theta + H \cdot \tan \varphi)$$
$$= 2 (L + H \cdot \tan \varphi)$$

Substitution of this into <5> leads to

$$2(L + H \cdot \tan \varphi) > 2L + D2.$$

$$\therefore \tan \varphi > D2/2H \cdots \cdots <5>'$$

Here, from Snell's law,

$$n1 \cdot \sin \theta = n3 \cdot \sin \varphi$$

$$\therefore \sin \varphi = \sin \theta/n3$$

$$\therefore \cos \varphi = \sqrt{(1 - \sin \varphi \cdot \sin \varphi)}$$
$$= \sqrt{(1 - \sin \theta \cdot \sin \theta/(n3 \cdot n3))}$$

Substitution of these into <5>' leads to

$$\sin \theta/\sqrt{(n3 \cdot n3 - \sin \theta \cdot \sin \theta)} > D2/2H \cdots \cdots <5>''.$$

Here, $\sin \theta = L/\sqrt{(L \cdot L + h \cdot h)}$ is substituted to obtain

11

$$\sqrt{((n3 \cdot n3 - 1) + (n3 \cdot h/L) \cdot (n3 \cdot h/L))} < 2H/D2$$

$$\therefore (n3 \cdot n3 - 1) + (n3 \cdot h/L) \cdot (n3 \cdot h/L) < (2H/D2) \cdot (2H/D2)$$

$$\therefore (n3 \cdot h/L) \cdot (n3 \cdot h/L) < (2H/D2) \cdot (2H/D2) - (n3 \cdot n3 - 1)$$

$$\therefore n3 \cdot h/L < \sqrt{((2H/D2) \cdot (2H/D2) - n3 \cdot n3 + 1)}$$

$$\therefore h < (L/n3) \cdot \sqrt{((2H/D2) \cdot (2H/D2) - n3 \cdot n3 + 1)} \cdots \cdots \langle 5\rangle'''$$

$$P'S' > 2L + D1 + D2 \cdots \cdots \langle 6\rangle$$

Here,

$$P'Q' = h \cdot \tan\theta1 = (2L + D1)/2$$

$$Q'R' = O'B' = 2H \cdot \tan\varphi1 \quad R'S' = h \cdot \tan\theta1$$

$$\therefore P'S' = P'Q' + Q'R' + R'S'$$
$$= h \cdot \tan\theta1 + 2H \cdot \tan\varphi1 + h \cdot \tan\theta1$$
$$= 2(h \cdot \tan\theta1 + H \cdot \tan\varphi1)$$
$$= 2((2L + D1)/2 + H \cdot \tan\varphi1)$$
$$= 2L + D1 + 2H \cdot \tan\varphi1$$

Substituting this into <6> leads to

$$2L + D1 + 2H \cdot \tan\varphi1 > 2L + D1 + D2.$$

$$\therefore \tan\varphi1 > D2/2H \cdots \cdots \langle 6\rangle'$$

Here, from Snell's law,

$$n1 \cdot \sin\theta1 = n3 \cdot \sin\varphi1$$

$$\therefore \sin\varphi1 = \sin\theta1/n3$$

$$\therefore \cos\varphi1 = \sqrt{(1 - \sin\varphi1 \cdot \sin\varphi1)}$$
$$= \sqrt{(1 - \sin\theta1 \cdot \sin\theta1/(n3 \cdot n3))}$$

Substitution of these into <6>' leads to

$$\sin \theta 1/\sqrt{(n3 \cdot n3 - \sin \theta 1 \cdot \sin \theta 1)} > D2/2H \cdot \cdot \cdot \cdot \cdot <6>''.$$

Here, substitution of $\sin \theta 1 = (L + D1/2)/\sqrt{(h \cdot h + (L + D1/2) \cdot (L + D1/2))}$ leads to

$$(L + D1/2)/\sqrt{(n3 \cdot n3 \cdot \{h \cdot h + (L + D1/2) \cdot (L + D1/2)\} - (L + D1/2)(L + D1/2))} > D2/2H.$$

$$\therefore h < (L + D1/2)/n3 \times \{\{(2H/D2) \cdot (2H/D2) - n3 \cdot n3 + 1 \cdot \cdot \cdot \cdot \cdot <6>'''$$

The upper limit value is h that satisfies both the derivation formulas (1) (<5>''') and (2) (<6>'''). In practical terms, formula <5>''' is the maximum value.

Conditional expressions of the film thickness d of the sample 12 and the dimensions of the measurement instrument (sensor interval L, aperture D1 of the light projecting part, and aperture D2 of the light receiving part) regarding the condition 3 are derived as below.

$$OA = d/\cos \gamma = AB$$

$$OB = 2d \cdot \tan \gamma$$

$$OC = OB \cdot \sin \theta = 2d \cdot \tan \gamma \cdot \sin \theta$$

From Snell's Law,

$$n1\sin \theta = \sin \theta = n2 \cdot \sin \gamma.$$

The optical path length difference $\Delta$ between <1> and <2> is expressed as below:

$$\Delta = n2 \cdot (OA + AB) - OC$$
$$= 2 \cdot n2 \cdot d/\cos \gamma - 2d \cdot \tan \gamma \cdot \sin \theta$$
$$= 2 \cdot n2 \cdot d \cdot \cos \gamma.$$

Therefore, the phase difference $\Delta AA$ of the light beam AA in the shortest optical path is expressed as below:

$$\Delta AA = 2 \cdot n2 \cdot d \cdot (2\pi/\lambda) \cdot \cos \gamma\theta.$$

The phase difference $\Delta BB$ of the light beam BB in the longest optical path is expressed as below:

$$\Delta BB = 2 \cdot n2 \cdot d \cdot (2\pi/\lambda) \cdot \cos \gamma\alpha 1.$$

Therefore, the conditional expressions for the difference between the phase differences is as follows:

$$|\Delta AA - \Delta BB| = 2 \cdot n2 \cdot d \cdot (2\pi/\lambda) \cdot |\cos \gamma\theta - \cos \gamma\alpha 1| < \pi \cdot \cdot \cdot \cdot \cdot <7>$$

Detailed calculation is further illustrated below.

$$\cos \gamma\theta = \surd(1 - \sin \gamma\theta \cdot \sin \gamma\theta).$$

From Snell's Law,

$$n1 \cdot \sin \theta = \sin \theta = n2 \cdot \sin \gamma\theta.$$

Substitution into the above equation leads to

$$\cos \gamma\theta = \surd(1 - (\sin \theta/n2) \cdot (\sin \theta/n2)).$$

Here,
From

$$\sin \theta = L/\surd(L \cdot L + h \cdot h),$$

$$\cos \gamma\theta = \surd\{1 - L \cdot L/(n2 \cdot n2 \cdot (L \cdot L + h \cdot h))\}$$
$$= \surd[\{(n2 \cdot n2 - 1) \cdot L \cdot L + n2 \cdot n2 \cdot h \cdot h\}/\{n2 \cdot n2 \cdot (L \cdot L + h \cdot h)\}] \cdots \cdot <8>$$

Similarly,

$$\cos \gamma\alpha1 = \surd(1 - \sin \gamma\alpha1 \cdot \sin \gamma\alpha1).$$

From Snell's Law,

$$n1 \cdot \sin \alpha1 = \sin \alpha1 = n2 \cdot \sin \gamma\alpha1.$$

Substitution into the above equation leads to

$$\cos \gamma\alpha1 = \surd\{1 - (\sin \alpha1/n2) \cdot (\sin \alpha1/n2)\}.$$

Here,

$$\sin \alpha1 = \{(2L + D1 + D2)/2\}/\surd[\{(2L + D1 + D2) \cdot (2L + D1 + D2)/4\} + h \cdot h].$$

From this equation,

$$\cos \gamma\alpha1 = \surd[1 - (2L + D1 + D2) \cdot (2L + D1 + D2)/\{n2 \cdot n2 \cdot \{(2L + D1 + D2) \cdot (2L + D1 + D2) + 4 \cdot h \cdot h\}\}]$$

$$= \surd[\{(n2 \cdot n2 - 1) \cdot (2L + D1 + D2) \cdot (2L + D1 + D2) + 4 \cdot n2 \cdot n2 \cdot h \cdot h\}/\{n2 \cdot n2 \cdot \{(2L + D1 + D2) \cdot (2L + D1 + D2) + 4 \cdot h \cdot h\}\}] \cdots \cdot <9>$$

Surface reflection interference light can be received by substituting equations <8> and <9> into formula <7>.
The relationship between the film thickness d to be measured and the dimensions of the measurement device (the light projection-light reception interval 2L, the aperture D1 of the light projecting part, and the aperture D2 of the light receiving part) is obtained.
Next, derivation of a theoretical formula regarding the conditions for measurement of film thickness interference fringes on the Petri dish 14 will be described.

(Theoretical Design)

Next, a theoretical design for the above three conditions will be described. As a measurement system, the sizes of the light projecting part 6A and the light receiving part 6B, and the distance between the light projecting part 6A and the light receiving part 6B can be set as desired. It is also possible to change the distance between the sample 12 and the light projecting part 6A and the distance between the sample 12 and the light receiving part 6B. Note that, in the present embodiment, in place of the light projecting optical fiber 6a and the light receiving optical fiber 6b, optical components such as lenses that do not require focus adjustment may be used for light projection and light reception. Alternatively, small projector and receiver may be directly disposed.

Meanwhile, in order to extract only the surface reflection interference components, it is necessary to satisfy conditions defined by theoretical formulas. That is, the condition that the surface reflection interference light, generated from the light beam having been emitted from the light projecting part 6A an incident on the sample 12, be incident on the light receiving part 6B gives the lower limit of the measurement instrument-measurement plane distance h. Moreover, the condition that noise components, transmitted to and reflected at the back surface of a container out of the irradiation light, not be included gives the upper limit of the measurement instrument-measurement plane distance h. It is important to satisfy the both conditions in the measurement of the surface reflection interference component.

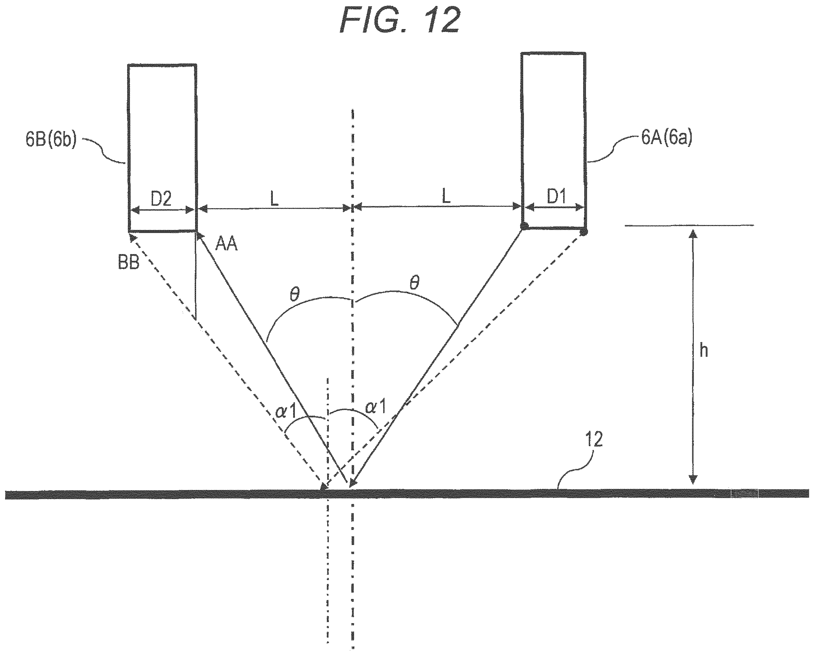

Meanwhile, the received interference components include various light beams: for example in Fig. 12, the interference light reaching the left end of the light receiving part 6B from the right end of the light projecting part 6A is a long distance, whereas there is a light beam travelling a short distance such as from the left end of the light projecting part 6A to the right end of the light receiving part 6B, and thus the phases may be disadvantageously shifted. It is also necessary to satisfy the condition that the phases of all surface reflection interference components received not be reversed. These conditions are largely affected by the film thickness of the sample 12, and thus the film thickness that can be measured is limited depending on the conditions.

Note that the structure of the light transmission part 6 is not limited as long as the conditions 1 to 3 are satisfied. For example, the light projecting part and the light receiving part may be coaxial or have separate axes. Moreover, one of them may be at a different position, the two may have opposite angles, or one of the two may be orthogonal to a measurement plane, whereas the other is inclined.

Note that the calculation of the interference phase difference is performed by using a formula obtained by dividing both sides by $\pi$:

$$|\Delta AA - \Delta BB| = 2 \times n2 \times d \times (2/\lambda) \times |\cos \gamma\theta - \cos \gamma\alpha1| < 1.$$

(Design Using Theoretical Formula)

In designing a measurement device using the theoretical formulas, the following actual measurement values of an MI-Affinty (manufactured by Konica Minolta, INC.) dedicated optical fiber trusted as a coaxial optical fiber for reflection interference measurement were used as initial values. The present invention is not limited to these design examples since there are many design elements.

[Table 1]

| n1 (Air Refractive Index) | n2 (Refractive Index in Target Film Thickness) | n3 (Refractive Index of Container) | Sensor Interval 2L (mm) | Light Projecting Fiber Size D1 (mm) | Light Receiving Sensor Fiber Size D2 (mm) |
|---|---|---|---|---|---|
| 1 | 1.53 | 1.59 | 0,191 | 0.208 | 0.2 |
| Target Film Thickness d ($\mu$m) | Wavelength ($\mu$m) | Container Thickness H (mm) | Light Projection NA | Light Reception NA | Measurement Instrument-Measurement Target Film Distance h (mm) |
| 1 | 0.4 | 1 | 0.54 | 0.22 | 1.2 |

(1) Theoretical design example 1: Influence of measurement instrument-measurement plane distance h and light projection-light reception interval 2L

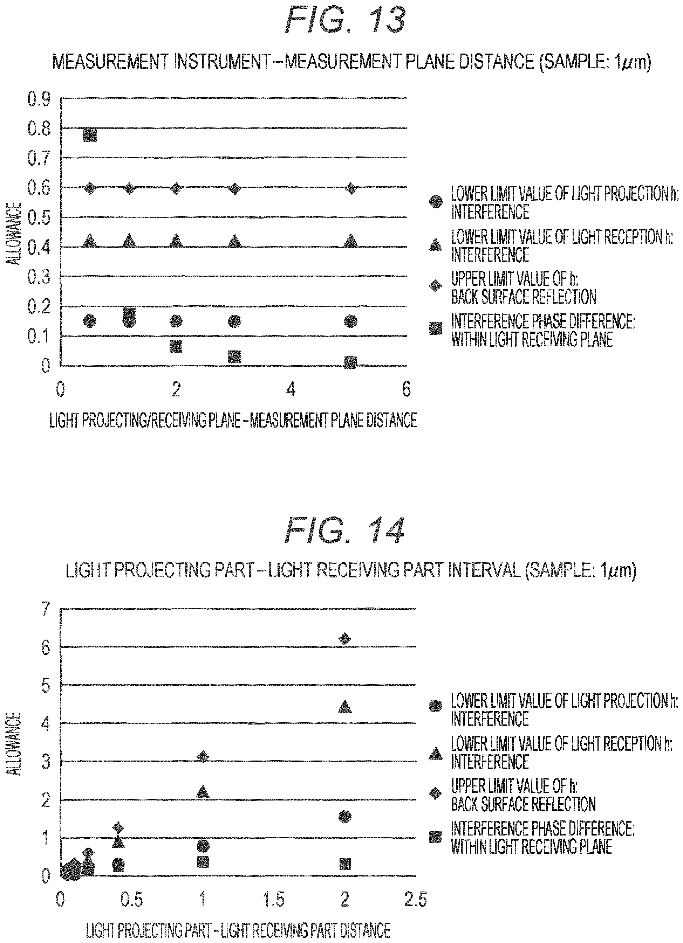

In the measurement device of the present invention, it can be understood that the interference measurement conditions exists only between 0.42 and 0.596 where the measurement instrument-measurement plane distance h (mm) is much shortened than usual (see Fig. 13). However, the difference between the upper limit value and the lower limit value of h is only 0.2 mm, and thus high device accuracy is required. This shows that measurement in this region is difficult in practice. On the other hand, it can be understood that the allowance of h is increased and the measurement becomes easier as the light projection-light reception interval 2L becomes wider (see Fig. 14).

(2) Theoretical design example 2: Influence of measurement instrument-measurement plane distance h

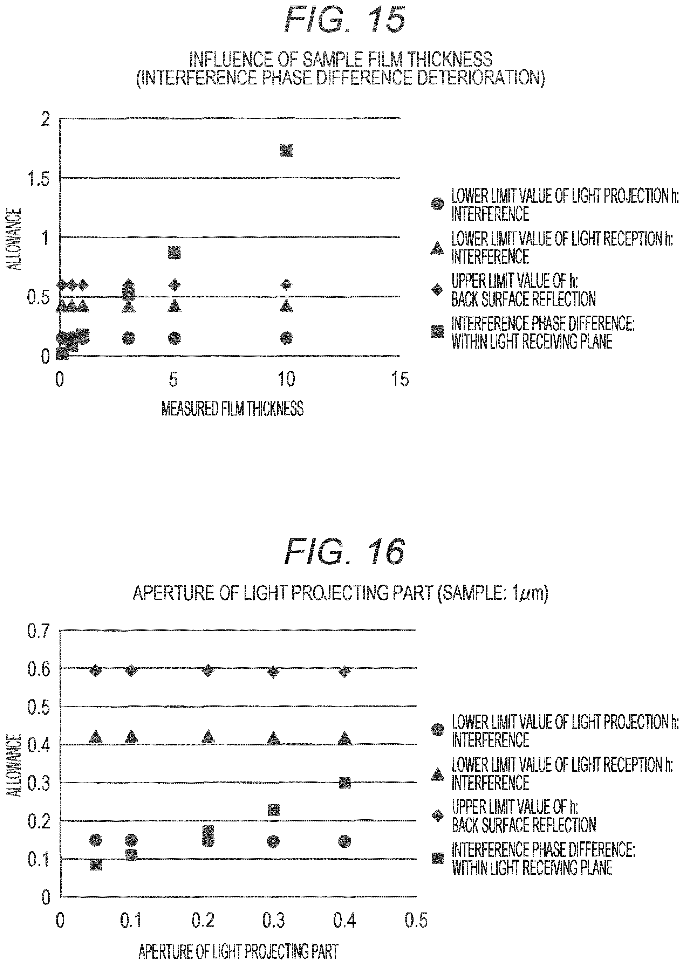

It can be seen that the film thickness thicker than or equal to 6 $\mu$m cannot be measured under these device conditions since the phases of the interference waveforms are reversed to cancel each other out when the film thickness of the sample 12 is allowed to vary (see Fig. 15).

(3) Theoretical design example 3: Influence of sizes of light projecting part 6A and light receiving part 6B

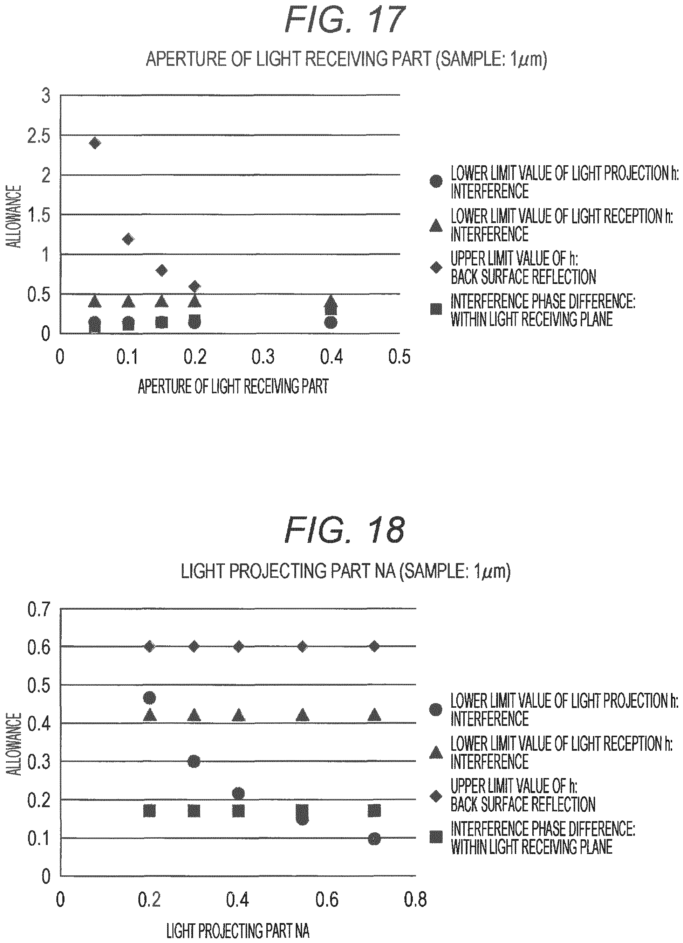

It can be understood that although this level of size differences of the light projecting part 6A have little influence on the lower limit and the upper limit of the measurement instrument-measurement plane distance h, the interference phase difference may become too large when the size becomes too large (see Fig. 16). On the other hand, it can be seen that the lower limit and the upper limit of the measurement instrument-measurement plane distance h are increased and the allowance is significantly increased when the size of the light receiving part 6B is reduced (see Fig. 17). It can be understood that the interference phase difference may increase and that the measurement accuracy may be deteriorated when the size of the light projecting part 6A or the light receiving part 6B increases.

(4) Theoretical design example 4: Influence of N/A of light projecting part 6A and light receiving part 6B

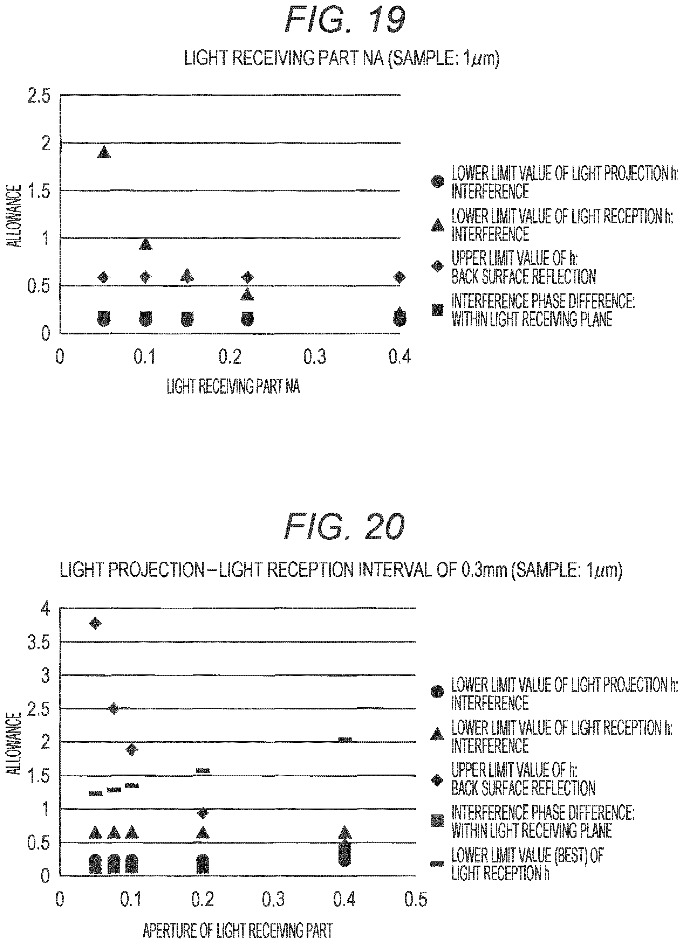

The lower limit value of the light projection h becomes large when the N/A of the light projecting part 6A is too small; however, this level of differences have no significant influence (see Fig. 18). On the other hand, it can be understood that when the N/A of the light receiving part 6B is reduced, the light reception lower limit value exceeds the upper limit value related to back surface reflection at less than or equal to 0.2 and that there is no suitable point of the measurement instrument-measurement plane distance h, thereby making measurement difficult (see Fig. 19).

(5) Theoretical design example 5: Influence of increase of light projection-light reception interval 2L (improved design)

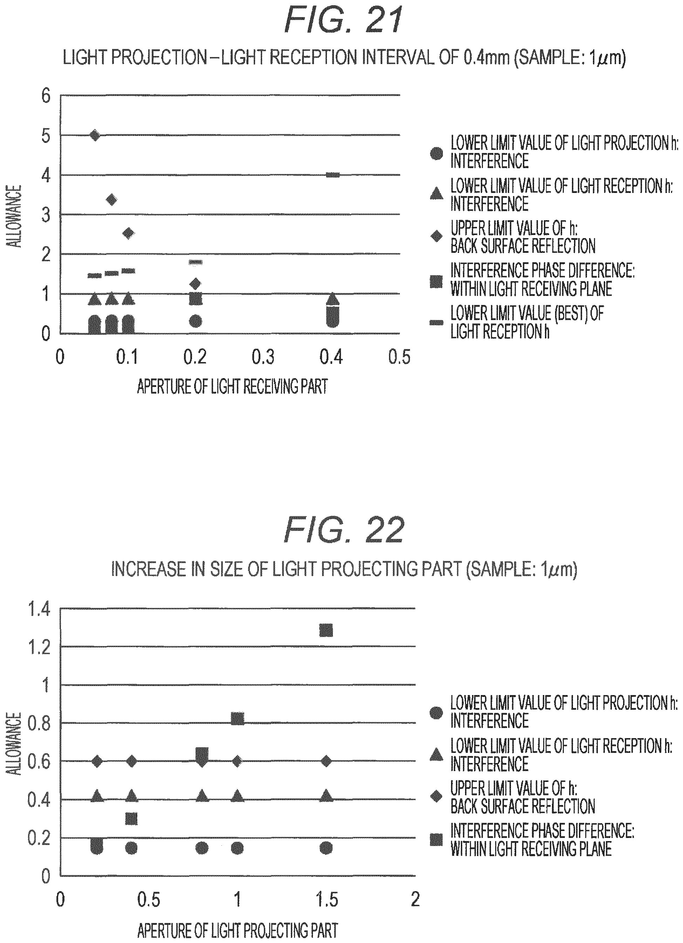

It can be understood that by increasing the light projection-light reception interval 2L from the initial 0.2 mm to 0.3 mm or 0.4 mm, the allowance of measurement increases and that in relation to the size of the light receiving part 6B, the lower limit value (best) of the measurement instrument-measurement plane distance h on the light receiving side, capable of receiving most of the reflection interference light, is also satisfied for the light receiving part 6B sized less than or equal to 0.1 mm (see Fig. 20). It can be seen that there are conditions that satisfy the lower limit and the upper limit of the measurement instrument-measurement plane distance h even for the light receiving part 6B sized 0.2 mm (see Fig. 21).

(6) Theoretical design example 6: Influence of increase in size of light projection-light reception (deteriorated design)

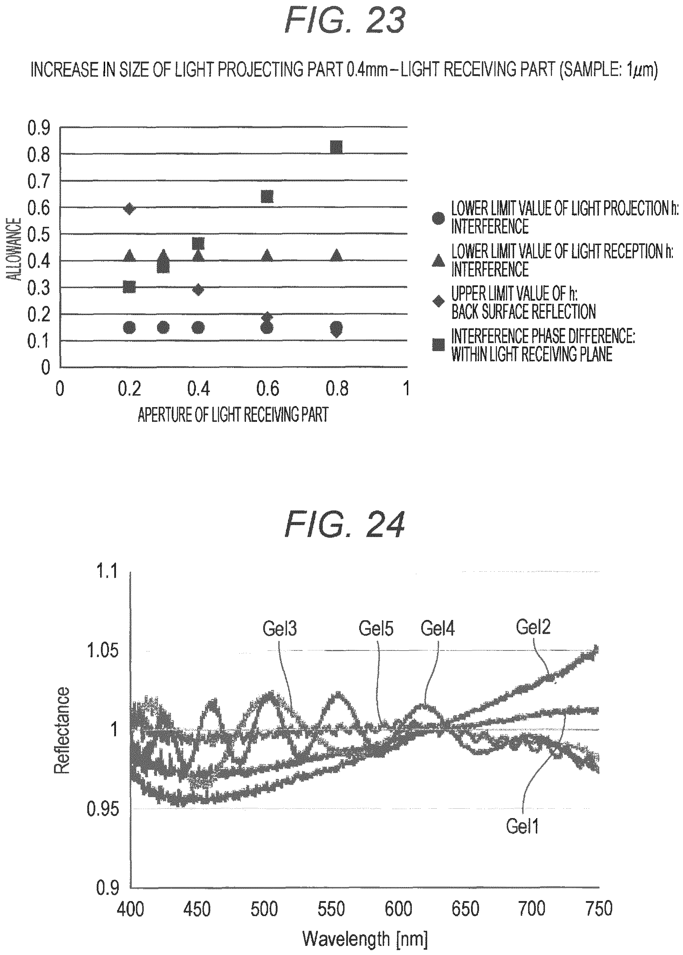

It can be seen that the interference phase difference exceeds 1 when the size of the light projecting part 6A is increased and exceeds 1 mm and that interference measurement becomes completely impossible (see Fig. 22). It is also understood that the interference phase difference exceeds 1 around 1 mm when the size of light reception is increased while the size of the light projecting part 6A is fixed to 0.4 mm (see Fig. 23).

Hereinafter, examples of experiments performed using the measurement system 1 according to the embodiment will be described.

Examples

[Sample Preparation 1] Prior to performing examples 1 to 5, an operator first prepared five 30 ml sample tubes, and weighed 0.1 g, 0.25 g, 0.5 g, 1 g, and 2 g of gelatin (Gelatin Type A manufactured by MP Biomedicals, Inc) as the sample 12 as illustrated in Table 2. Further, ultrapure water was added to each portion of the gelatin so that the total weight of the gelatin and the ultrapure water in a sample tube weights 10 g each. Next, each sample tube was left to be allowed to swell at room temperature for 30 minutes, and then the water and the gelatin in each sample tube were heated to 50°C while being stirred. The gelatin was dissolved in water in this manner to obtain gelatin solutions at concentrations of 1 wt%, 2.5 wt%, 5 wt%, 10 wt%, and 20 wt%. The samples of the prepared gelatin solutions of the respective concentrations were numbered Gel1, Gel2, Gel3, Gel4, and Gel5, respectively.

Next, five cut-outs, obtained by cutting a polystyrene Petri dish 14 (manufactured by Iwaki Glass Co. Ltd.) into a size of 26 mm $\times$ 20 mm, were prepared as the thick film transparent medium. Then the cut-out five polystyrene Petri dishes were sequentially set on a spin coater, and the above five types of gelatin solutions were applied onto the polystyrene Petri dishes. Note that each of the gelatin solutions was applied onto the polystyrene Petri dish in such a manner that the spin coater was pre-accelerated to a rotational speed of 500 rpm five seconds after the start of the rotation, and then allowed to rotate for 60 seconds to allow the solution which had been excessively applied to be removed. Next, the polystyrene Petri dish applied with the gelatin was dried by heating in a drier set at 60°C for 30 minutes to allow gelatin of different thicknesses to be formed on the five polystyrene Petri dishes. Next, after taking a photograph of a cross section of the gelatin by an electron microscope, the film thickness of the gelatin was obtained.

[Table 2]

| Sample Number | Gelatin Weight | Concentration of Gelatin Solution | SEM Observation Film Thickness |
|---|---|---|---|
| Gel 1 | 0.1 g | 1 wt% | 100 nm |
| Gel 2 | 0.25 g | 2.5 wt% | 400 nm |
| Gel 3 | 0.5 g | 5 wt% | 600 nm |
| Gel 4 | 1 g | 10 wt% | 2 $\mu$m |
| Gel 5 | 2 g | 20 wt% | 10 $\mu$m |

The following theoretical formulas were used in the configuration of the measurement device of the examples. Although expressions 1 and 2 both define the lower limit value of h, a larger one is determined as the lower limit value of h. The distance h between a sample and a light receiving sensor needs to be set between the lower limit value and the upper limit value of the above expressions. If the distance h between the sample and the light receiving sensor is not set between the lower limit value and the upper limit value of the above expressions, noise increases and the reflected interference signal decreases.

$$\text{Expression 1: } L/\tan \beta 1$$

Lower limit value of light projection h (light projecting part A-measurement plane distance): Condition for capturing surface reflection interference light

$$\text{Expression 2: } L/\tan \beta 2$$

Lower limit value of light reception h (light receiving part B-measurement plane distance): Condition for capturing surface reflection interference light

$$\text{Expression 3: } (L/n3) \cdot \sqrt{(2H/D2) \cdot (2H/D2) - n3 \cdot n3 + 1)}$$

Upper limit value of light reception h: Condition for elimination of back surface reflection

$$\text{Formula 4: } |\Delta AA - \Delta BB| = 2 \times n2 \times d \times (2\pi/\lambda) \times |\cos \gamma\theta \cos \gamma\alpha 1| < 1$$

Interference phase difference in the light receiving surface 6d:

[Example 1]

The MI-Affinity coaxial optical fiber was placed in a dark box, and its height was made adjustable by a Z stage. In addition, a non-transmissive mask made of steel was prepared which has a size that completely closes a $\varphi$200 $\mu$m core part of the light receiving part 6B and has a 100 $\mu$m pinhole opened at the center part thereof. The coaxial optical fiber was improved by attaching the optically black mask so that the core diameter becomes 100 $\mu$m and that light projection-light reception interval becomes 0.3 mm. Measurement data was imported from the spectroscope 4 into a personal computer via USB, and spectrum intensity data of the polystyrene Petri dishes applied with the gelatin was normalized and divided by a normalized spectrum intensity of a reference Petri dish not applied with the gelatin to obtain spectral reflectance. The configuration of these measurement devices, theoretical calculation results, and measurement results of the film thickness are shown below.

[Table 3]

| Device Configuration | | | | | | | | | | | | | | |
|---|---|---|---|---|---|---|---|---|---|---|---|---|---|---|
| | | | Device and Measurement Conditions | | | | | | | | | | | |
| Example No. | Experiment No. | Device Type | n1 (Air Refractive Index) | n2 (Refractive Index in Target Film Thickness) | n3 (Refractive Index of Container) | Sensor Interval 2L (mm) | Light Projecting Fiber Size D1 (mm) | Light Receiving Sensor Fiber Size D2 (mm) | Target Film Thickness d (μm) | Wavelength (μm) | Container Thickness H (mm) | Light Projection NA | Light Reception NA | Measurement Instrument-Measurement Target Film Distance h (mm) |
| Example 1 | Comparative Example 1 | MI-Affinity Coaxial Fiber 200 μm | 1 | 1.53 | 1.59 | 0.2 | 0.208 | 0.2 | 0.1 | 0.4 | 1 | 0.54 | 0.22 | 1.2 |
| | Comparative Example 2 | | 1 | 1.53 | 1.59 | 0.2 | 0.208 | 0.2 | 0.4 | 0.4 | 1 | 0.54 | 0.22 | 1.2 |
| | Comparative Example 3 | | 1 | 1.53 | 1.59 | 0.2 | 0.208 | 0.2 | 0.6 | 0.4 | 1 | 0.54 | 0.22 | 1.2 |
| | Comparative Example 4 | | 1 | 1.53 | 1.59 | 0.2 | 0.208 | 0.2 | 2 | 0.4 | 1 | 0.54 | 0.22 | 1.2 |
| | Comparative Example 5 | | 1 | 1.53 | 1.59 | 0.2 | 0.208 | 0.2 | 10 | 0.4 | 1 | 0.54 | 0.22 | 1.2 |
| | Measurement 1 | Improved Coaxial Fiber 100 μm | 1 | 1.53 | 1.59 | 0.2 | 0.208 | 0.2 | 0.6 | 0.4 | 1 | 0.54 | 0.22 | 0.57 |
| | Measurement 2 | | 1 | 1.53 | 1.59 | 0.3 | 0.208 | 0.1 | 0.1 | 0.4 | 1 | 0.54 | 0.22 | 1.7 |
| | Measurement 3 | | 1 | 1.53 | 1.59 | 0.3 | 0.208 | 0.1 | 0.4 | 0.4 | 1 | 0.54 | 0.22 | 1.7 |
| | Measurement 4 | | 1 | 1.53 | 1.59 | 0.3 | 0.208 | 0.1 | 0.6 | 0.4 | 1 | 0.54 | 0.22 | 1.7 |
| | Measurement 5 | | 1 | 1.53 | 1.59 | 0.3 | 0.208 | 0.1 | 2 | 0.4 | 1 | 0.54 | 0.22 | 1.7 |
| | Measurement 6 | | 1 | 1.53 | 1.59 | 0.3 | 0.208 | 0.1 | 10 | 0.4 | 1 | 0.54 | 0.22 | 1.7 |

[Table 4]

| Example No. | Experiment No. | Device Type | Lower Limit Value of Light Projection h: Interference | Lower Limit Value of Light Reception h: Interference | Upper Limit Value of h: Back Surface Reflection | Interference Phase Difference: Within Light Receiving Surface | Determination | Note | Scope | Measurement Result of Surface Reflection Interference | | | |
|---|---|---|---|---|---|---|---|---|---|---|---|---|---|
| | | | Expression 1 | Expression 2 | Expression 3 | Formula 4 | Acceptance of Theoretical Formula | Reason for Rejection | Within/ Outside the Present Invention | Interference Wavelength | Calculated Film Thickness | Contrast | General Evaluation |
| EP 3 598 060 A1 | Comparative Example 1 | MI-Affinity Coaxial Fiber 200 μm | 0.15586 | 0.44341 | 0.624 | 0.018 | Not Accepted | h deviates from the range | Outside the Present Invention | Difficult to Measure | × | - | × |
| | Comparative Example 2 | | 0.15586 | 0.44341 | 0.624 | 0.070 | Not Accepted | h deviates from the range | Outside the Present Invention | Difficult to Measure | x | - | × |
| | Comparative Example 3 | | 0.15586 | 0.44341 | 0.624 | 0.105 | Not Accepted | h deviates from the range | Outside the Present Invention | Measurement Possible | 633 nm | 0.01500 | × to △ |
| | Comparative Example 4 | | 0.15586 | 0.44341 | 0.624 | 0.352 | Not Accepted | h deviates from the range | Outside the Present Invention | Measurement Possible | 1800 nm | 0.01900 | × to △ |
| | Comparative Example 5 | | 0.15586 | 0.44341 | 0.624 | 1.758 | NotAccepted | h, Phase Difference | Outside the Present Invention | Difficult to Measure | × | - | × |

| Measurement Results | | | | | | | | | | | | | |
|---|---|---|---|---|---|---|---|---|---|---|---|---|---|
| Example No. | Experiment No. | Device Type | Lower Limit Value of Light Projection h: Interference | Lower Limit Value of Light Reception h: Interference | Upper Limit Value of h: Back Surface Reflection | Interference Phase Difference: Within Light Receiving Surface | Determination | Note | Scope | Measurement Result of Surface Reflection Interference | | | |
| | | | Expression 1 | Expression 2 | Expression 3 | Formula 4 | Acceptance of Theoretical Formula | Reason for Rejection | Within/ Outside the Present Invention | Interference Wavelength | Calculated Film Thickness | Contrast | General Evaluation |
| Example 1 | Measurement 1 | | 0.15586 | 0.44341 | 0.624 | 0.386 | Accepted | | Within the Present Invention | Measurement Possible | 611 mn | 0.04500 | ○ |
| | Measurement 2 | | 0.23380 | 0.66511 | 1.883 | 0.008 | Accepted | | Within the Present Invention | Measurement Possible | 78 nm | 0.02600 | ○ |
| | Measurement 3 | | 0.23380 | 0.66511 | 1.883 | 0.031 | Accepted | | Within the Present Invention | Measurement Possible | 435 nm | 0.05100 | ○ |
| | Measurement 4 | Improved Coaxial Fiber 100 μm | 0.23380 | 0.66511 | 1.883 | 0.046 | Accepted | | Within the Present Invention | Measurement Possible | 633 nm | 0.04300 | ○ |
| | Measurement 5 | | 0.23380 | 0.66511 | 1.883 | 0.153 | Accepted | | Within the Present Invention | Measurement Possible | 2016 nm | 0.04600 | ○ |
| | Measurement 6 | | 0.23380 | 0.66511 | 1.883 | 0.763 | Accepted | | Within the Present Invention | Measurement Possible | 9178 nm | 0.04600 | ○ |

[Table 5]

| | Comparative Example 1 | Comparative Example 2 | Comparative Example 3 | Comparative Example 4 | Comparative Example 5 | Measurement 1 | Measurement 2 | Measurement 3 | Measurement 4 | Measurement 5 | Measurement 6 |
|---|---|---|---|---|---|---|---|---|---|---|---|
| Sample | Gel 1 | Gel 2 | Gel 3 | Gel 4 | Gel 5 | Gel 3 | Gel 1 | Gel 2 | Gel 3 | Gel 4 | Gel 5 |
| Calculated Film Thickness | | | 633 nm | 1800 nm | | 633 nm | 78 nm | 435 nm | 611 nm | 2016 nm | 9178 nm |
| Contrast | | | 0.015 | 0.019 | | 0.045 | 0.026 | 0.051 | 0.043 | 0.046 | 0.046 |

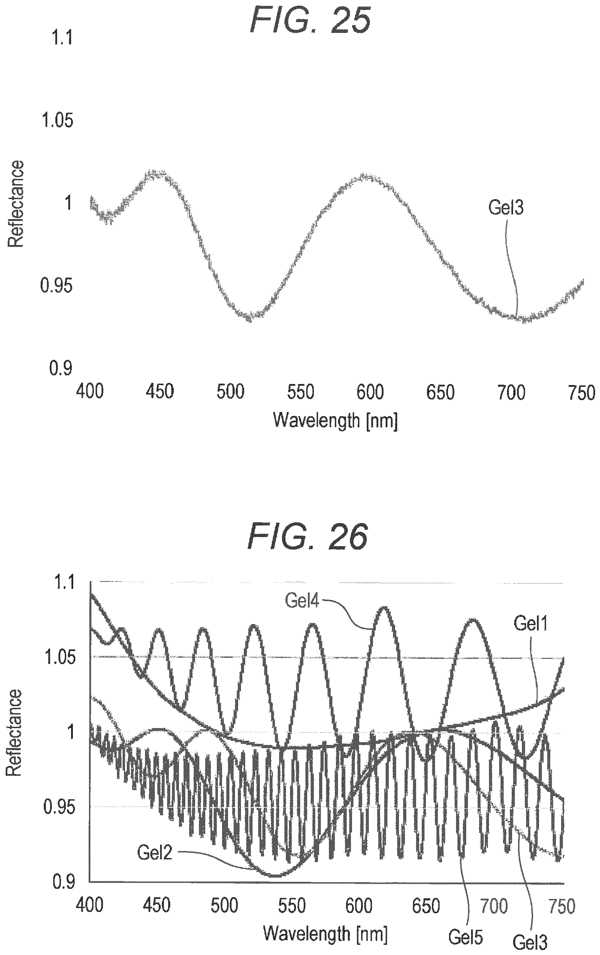

Even with a coaxial optical fiber for reflection interference spectroscopy, it is difficult to efficiently extract only the surface reflection interference light if it is not designed for removing the back surface reflection noise, and thus no interference signal can be obtained. From the theoretical formula, it is desirable that the light receiving part 6B be placed at a position that satisfies the lower limit condition of h, which is the condition for receiving the front surface reflection interference light, and the upper limit condition of h related to the back surface noise. However, as illustrated in Fig. 24, a comparative example 1-5 does not satisfy the theoretical condition since it exceeds the upper limit of h. It is also clear in the measurement results that no useful interference signals could be received regardless of the film thickness of the sample 12. It is understood that the sample 12 of the Petri dish 14 can be measured if the present optical fiber having the aperture of 200 $\mu$m at the light receiving surface 6d is used and if the distance between the sample 12 and the light receiving optical fiber 6b is set to 0.57 mm as illustrated by the theoretical formula. On the other hand, the interference signal was accurately received, and the film thickness was correctly calculated in measurement 1 (see Fig. 25) and measurements 2-5 (see Fig. 26) in which the mask was attached to the light receiving part 6B of the optical fiber so that the aperture of the light receiving surface 6d becomes 100 $\mu$m and that light projection-light reception interval 2L becomes 0.3 mm, and measurement was performed under exactly the same conditions except that h was controlled to be optimal. That is, it became clear that a thin film on the petri dish 14 can be accurately measured by the measurement device of the present invention in which the aperture of the light receiving surface 6d is set to $\varphi$ 100 $\mu$m, the distance between the light projecting surface 6c and the light receiving surface 6d is set to 0.3 mm, and the interval between the sample 12 and the light receiving surface 6d is set to 1.7 mm.

Note that the film thickness of the gelatin was approximately calculated using equation 5, which is derived from Snell's law, and then was calculated by detailed fitting using an interference waveform simulator. The refractive index n1 of the gelatin is set to 1.53.

$$d = N \cdot \lambda1 \cdot \lambda2/(\lambda1 - \lambda2) \times 1/(2 \cdot n1 \cdot \cos \theta) \cdots\cdots \text{ Equation 5}$$

$$\text{Contrast} = (a - b)/(a + b) \cdots\cdots \text{ Equation 6}$$

[Example 2]

In the configuration of the measurement device of example 1, only the light projecting optical fiber 6a forming the cladding portion was connected to a white light source (lamp housing MHF-V501, halogen lamp MORITEX LM-50 12V 50W, both manufactured by MORITEX Corp.) without connecting the light receiving optical fiber 6b that forms the core portion of the attached coaxial optical cable to a light source. Meanwhile, an optical fiber was selected from the following list of optical fibers (manufactured by Edmund Optics) the diameter of which varies, secured at an angle of 0 degrees with respect to the sample surface, and connected to a spectroscope (mini-spectroscope C10535CA-51 manufactured by Hamamatsu Photonics K.K.).

[Table 6]

| Fiber No. | Product Code | Aperture | NA |
|-----------|--------------|----------|------|
| F1 | 59344 | 50 $\mu$m | 0.22 |
| F2 | 58397 | 100 $\mu$m | 0.22 |
| F3 | 58398 | 200 $\mu$m | 0.22 |
| F4 | 58399 | 400 $\mu$m | 0.22 |

Next, the interval between the light projecting optical fiber 6a and the light receiving optical fiber 6b and the distance between the light receiving optical fiber 6b and the sample 12 were adjusted as illustrated in the table.

[Example 2-1]

A measurement device of a two-axes measurement system using a 50 $\mu$m optical fiber F1 for the light receiving part 6B was used. In both of comparative examples 1 and 2, the incident interference light cause phase inversion, and thus the theoretical formula is not satisfied. As a result, the gelatin thin film on the Petri dish was not measured correctly. On the other hand, it can be seen that the interference light can be measured accurately and that the film thickness is calculated with no problem in the measurement device of the measurements 1 to 4 satisfying the theoretical formulas of the present invention. That is, it became clear that a thin film on the petri dish 14 can be accurately measured by the measurement device of the present invention in which the aperture of the light receiving surface 6d is set to $\varphi 50\ \mu$m, the distance between the light projecting surface 6c and the light receiving surface 6d is set to be within a range of 0.2 mm and 0.4 mm, and the interval between the sample and the light receiving surface 6d is set to be within a range of 2.2 mm and 3 mm.

[Table 7]

| Device Configuration | | | | | | | | | | | | | | |
|---|---|---|---|---|---|---|---|---|---|---|---|---|---|---|
| Example No. | Experiment No. | Device Type | Device and Measurement Conditions | | | | | | | | | | | |
| | | | n1 (Air Refractive Index) | n2 (Refractive Index in Target Film Thickness) | n3 Refractive Index of Container) | Sensor Interval 2L (mm) | Light Projecting Fiber Size D1 (mm) | Light Receiving Sensor Fiber Size D2 (mm) | Target Film Thickness d ($\mu$m) | Wavelength ($\mu$m) | Container H (mm) | Light Projection NA | Light Reception NA | Measurement Instrument-Measurement Target Film Distance h (mm) |
| Example 2 | Comparative Example 1 | Light Projection/Reception Separate Axes, 50 $\mu$m Optical Fiber F1 | 1 | 1.53 | 1.59 | 0.2 | 0.208 | 0.05 | 10 | 0.4 | 1 | 0.54 | 0.22 | 0.4 |
| | Comparative Example 2 | | 1 | 1.53 | 1.59 | 0.8 | 0.208 | 0.05 | 10 | 0.4 | 1 | 0.54 | 0.22 | 1.6 |
| | Measurement 1 | | 1 | 1.53 | 1.59 | 0.2 | 0.208 | 0.05 | 0.4 | 0.4 | 1 | 0.54 | 0.22 | 2.2 |
| | Measurement 2 | | 1 | 1.53 | 1.59 | 0.2 | 0.208 | 0.05 | 0.6 | 0.4 | 1 | 0.54 | 0.22 | 2.2 |
| | Measurement 3 | | 1 | 1.53 | 1.59 | 0.3 | 0.208 | 0.05 | 0.6 | 0.4 | 1 | 0.54 | 0.22 | 3 |
| | Measurement 4 | | 1 | 1.53 | 1.59 | 0.4 | 0.208 | 0.05 | 0.6 | 0.4 | 1 | 0.54 | 0.22 | 3 |

[Table 8]

| Measurement Results | | | | | | | | | | | | | |
|---|---|---|---|---|---|---|---|---|---|---|---|---|---|
| Example No. | Experiment No. | Device Type | Lower Limit Value of Light Projection h: Interference | Lower Limit Value of Light Reception h: Interference | Upper Limit Value of h: Back Surface Reflection | Interference Phase Difference: Within Light Receiving Surface | Determination | Note | Scope | Measurement Result of Surface Reflection Interference | | | |
| | | | Expression 1 | Expression 2 | Expression 3 | Formula 4 | Acceptance of Theoretical Formula | Reason for Rejection | Within/ Outside the Present Invention | Interference Wavelength | Extreme Value Analysis | Contrast | General Evaluation |
| Example 2 | Comparative Example 1 | Light Projection/Reception Separate Axes, 50 μm Optical Fiber F1 | 0.155863892 | 0.443409033 | 2.515 | 6.357 | Not Accepted | h, Phase Difference | Outside the Present Invention | Measurement Possible | × | 0.005 | × |
| | Comparative Example 2 | | 0.623455568 | 1.773636131 | 10.058 | 1.320 | Not Accepted | h, Phase Difference | Outside the Present Invention | Measurement Possible | Δ | 0.015 | × to Δ |
| | Measurement 1 | | 0.155863892 | 0.443409033 | 2.515 | 0.080 | Accepted | | Within the Present Invention | Measurement Possible | ○ | 0.05 | ○ |
| | Measurement 2 | | 0.155863892 | 0.443409033 | 2.515 | 0.120 | Accepted | | Within the Present Invention | Measurement Possible | ○ | 0.045 | ○ |
| | Measurement 3 | | 0.233795838 | 0.665113549 | 3.772 | 0.071 | Accepted | | Within the Present Invention | Measurement Possible | ○ | 0.041 | ○ |
| | Measurement 4 | | 0.311727784 | 0.886818065 | 5.029 | 0.023 | Accepted | | Within the Present Invention | Measurement Possible | ○ | 0.04 | ○ |

[Example 2-2]

A measurement device of a two-axes measurement system using a 100 $\mu$m optical fiber F2 for the light receiving part 6B was used. In the comparative example 1, the incident interference light causes phase inversion, and in the comparative example 2, h is set outside the range between the upper limit and the lower limit of h and thus does not satisfy the theoretical formulas. As a result, the gelatin thin film on the Petri dish was not measured correctly. On the other hand, it can be seen that the interference light can be measured accurately and that the film thickness is calculated with no problem in the measurement device of the measurements 1 to 4 satisfying the theoretical formulas of the present invention. That is, it became clear that a thin film on the petri dish 14 can be accurately measured by the measurement device of the present invention in which the aperture of the light receiving surface 6d is set to $\varphi$100 $\mu$m, the distance between the light projecting surface 6c and the light receiving surface 6d is set to 0.4 mm, and the interval between the sample 12 and the light receiving surface 6d is set to 2.2 mm.

[Table 9]

| Device Configuration | | | | | | | | | | | | | | |
|---|---|---|---|---|---|---|---|---|---|---|---|---|---|---|
| Example No. | Experiment No. | Device Type | Device and Measurment Conditions | | | | | | | | | | | |
| | | | n1 (Air Refractive Index) | n2 (Refractive Index in Target Film Thickness) | n3 (Refractive Index of Container ) | Sensor Interval 2L (mm) | Light Projecting Fiber Size D1 (mm) | Light Receiving Sensor Fiber Size D2 (mm) | Target Film Thickness d ($\mu$m) | Wavelength ($\mu$m) | Container Thickness H (mm) | Light Projection NA | Light Reception NA | Measurement Instrument-Measurement Target Film Distance h (mm) |
| Example 3 | Comparative Example 1 | Light Projection/Reception Separate Axes, 100 $\mu$m Optical Fiber F2 | I | 1.53 | 1.59 | 0.6 | 0.208 | 0.1 | 10 | 0.4 | 1 | 0.54 | 0.22 | 1.5 |
| | Comparative Example 2 | | 1 | 1.53 | 1.59 | 0.4 | 0.208 | 0.1 | 10 | 0.4 | 1 | 0.54 | 0.22 | 4 |
| | Measurement 1 | | 1 | 1.53 | 1.59 | 0.4 | 0.208 | 0.1 | 0.4 | 0.4 | 1 | 0.54 | 0.22 | 2.2 |
| | Measurement 2 | | 1 | 1.53 | 1.59 | 0.4 | 0.208 | 0.1 | 0.6 | 0.4 | 1 | 0.54 | 0.22 | 2.2 |
| | Measurement 3 | | 1 | 1.53 | 1.59 | 0.4 | 0.208 | 0.1 | 2 | 0.4 | 1 | 0.54 | 0.22 | 2.2 |
| | Measurement 4 | | 1 | 1.53 | 1.59 | 0.4 | 0.208 | 0.1 | 10 | 0.4 | 1 | 0.54 | 0.22 | 2.2 |

[Table 10]

| Measurement Results | | | | | | | | | | | | | |
|---|---|---|---|---|---|---|---|---|---|---|---|---|---|
| Example No. | Experiment No. | Device Type | Lower Limit Value of Light Projection h: Interference | Lower Limit Value of Light Reception h: Interference | Upper Limit Value of h: Back Surface Reflection | Interference Phase Difference: Within Light Receiving Surface | Determination | Note | Scope | Measurement Result of Surface Reflection Interference | | | |
| | | | Expression 1 | Expression 2 | Expression 3 | Formula 4 | Acceptance of Theoretical Formula | Reason for Rejection | Within/ Outside the Present Invention | Interference Wavelength | Calculated Film Thickness | Contrast | General Evaluation |
| Example 3 | Comparative Example 1 | Light Projection/Reception Separate Axes, 100 μm Optical Fiber F2 | 0.467591676 | 1.330227098 | 3.766 | 1.505 | Not Accepted | Phase Difference | Outside the Present invention | Measurement Possible | Δ | 0.018 | × to Δ |
| | Comparative Example 2 | | 0.311727784 | 0.886818065 | 2.511 | 0.173 | Not Accepted | h | Outside the Present invention | Difficult to Measure | × | - | × |
| | Measurement 1 | | 0.311727784 | 0.886818065 | 2.511 | 0.022 | Accepted | | Within the Present Invention invention | Measurement Possible | ○ | 0.053 | ○ |
| | Measurement 2 | | 0.311727784 | 0.886818065 | 2.511 | 0.034 | Accepted | | Within the Present invention | Measurement Possible | ○ | 0.044 | ○ |
| | Measurement 3 | | 0.311727784 | 0.886818065 | 2.511 | 0.112 | Accepted | | Within the Present Invention | Measurement Possible | ○ | 0.043 | ○ |
| | Measurement 4 | | 0.311727784 | 0.886818065 | 2.511 | 0.559 | Accepted | | Within the Present Invention | Measurement Possible | ○ | 0.041 | ○ |

[Example 2-3]

A measurement device of a two-axes measurement system using a 200 $\mu$m optical fiber F3 for the light receiving part 6B was used. In both of the comparative examples 1 and 2, h does not satisfy the lower limit nor the upper limit of the theoretical calculation, and in the comparative example 1 the incident interference light causes phase inversion. In either respect, the theoretical formulas are not satisfied. As a result, the gelatin thin film on the Petri dish 14 could not be measured correctly. On the other hand, it can be seen that the interference light can be measured accurately and that the film thickness is calculated with no problem in the measurement device of the measurements 1 to 4 satisfying the theoretical formulas of the present invention. That is, it became clear that a thin film on the petri dish 14 can be accurately measured by the measurement device of the present invention in which the aperture of the light receiving surface 6d is set to $\varphi$200 $\mu$m, the distance between the light projecting surface 6c and the light receiving surface 6d is set to 0.3-0.5 mm, and the interval between the sample 12 and the light receiving surface 6d is set to a range between 0.9 mm and 1.5 mm.

[Table 11]

| Device Configuration | | | | | | | | | | | | | | | |
|---|---|---|---|---|---|---|---|---|---|---|---|---|---|---|---|
| Example No. | Experiment No. | Device Type | Device and Measurement Conditions | | | | | | | | | | | | |
| | | | n1 (Air Refractive Index) | n2 (Refractive Index in Target Film Thickness) | n3 (Refractive Index of Container) | Sensor Interval 2L(mm) | Light Projecting Fiber Size D1 (mm) | Light Receiving Sensor Fiber Size D2 (mm) | Target Film Thickness d (μm) | Wavelength (μm) | Container Thickness H (mm) | Light Projection NA | Light Reception NA | Measurement Instrument-Measurement Target Film Distance h (mm) |
| Example 4 | Comparative Example 1 | Light Projection/Reception Separate Axes, 200 μm Optical Fiber F3 | 1 | 1.53 | 1.59 | 0.3 | 0.208 | 0.2 | 10 | 0.4 | 1 | 0.54 | 0.22 | 1.2 |
| | Comparative Example 2 | | 1 | 1.53 | 1.59 | 0.3 | 0.208 | 0.2 | 0.6 | 0.4 | 1 | 0.54 | 0.22 | 3 |
| | Measurement 1 | | 1 | 1.53 | 1.59 | 0.3 | 0.208 | 0.2 | 0.1 | 0.4 | 1 | 0.54 | 0.22 | 0.9 |
| | Measurement 2 | | 1 | 1.53 | 1.59 | 0.3 | 0.208 | 0.2 | 0.4 | 0.4 | 1 | 0.54 | 0.22 | 0.9 |
| | Measurement 3 | | 1 | 1.53 | 1.59 | 0.3 | 0.208 | 0.2 | 0.6 | 0.4 | 1 | 0.54 | 0.22 | 0.9 |
| | Measurement 4 | | 1 | 1.53 | 1.59 | 0.3 | 0.208 | 0.2 | 2 | 0.4 | 1 | 0.54 | 0.22 | 1.5 |

[Table 12]

| Measurement Results | | | | | | | | | | | | | |
|---|---|---|---|---|---|---|---|---|---|---|---|---|---|
| Example No. | Experiment No. | Device Type | Lower Limit Value of Light Projection h: Interference | Lower Limit Value of Light Reception h: Interference | Upper Limit Value of h: Back Surface Reflection | Interference Phase Within Light Receiving Surface | Difference: Determination | Note | Scope | Measurement Result of Surface Reflection Interference | | | |
| | | | Expression 1 | Expression 2 | Expression 3 | Formula 4 | Acceptance of Theoretical Formula | Reason for Rejection | Within/Outside the Present Invention | Interference Wavelength | Calculated Film Thickness | Contrast | General Evaluation |
| Example 4 | Comparative Example 1 | Light Projection/Reception Separate Axes, 200 μm Optical Fiber F3 | 0.233795838 | 0.665113549 | 0.936 | 2.135 | Not Accepted | h, Interference Phase | Outside the Present invention | Difficult to Measure | × | - | × |
| | Comparative Example 2 | | 0.233795838 | 0.665113549 | 0.936 | 0.022 | Not Accepted | Distance h | Outside the Present Invention | Measurement Possible | Δ | 0.014 | × to Δ |
| | Measurement 1 | | 0.233795838 | 0.665113549 | 0.936 | 0.036 | Accepted | | Within the Present Invention | Measurement Possible | ○ | 0.023 | ○ |
| | Measurement 2 | | 0.233795838 | 0.665113549 | 0.936 | 0.142 | Accepted | | Within the Present invention | Measurement Possible | ○ | 0.049 | ○ |
| | Measurement 3 | | 0.233795838 | 0.665113549 | 0.936 | 0.213 | Accepted | | Within the Present invention | Measurement Possible | ○ | 0.041 | ○ |
| | Measurement 4 | | 0.38965973 | 1.108522582 | 1.560 | 0.376 | Accepted | | Within the Present Invention | Measurement Possible | ○ | 0.037 | ○ |

[Example 2-4]

A measurement device of a two-axes measurement system using a 400 μm optical fiber F4 for the light receiving part 6B was used. In both of comparative examples 1 and 2, the lower limit value and the upper limit value of the distance h between the light receiving surface and the sample are reversed, and in the comparative example 2, the incident interference light causes phase inversion. The theoretical formulas are not at all satisfied. As a result, the interference waveform could not be measured. Although this fiber diameter has a small measurable area, it can be seen that the interference light can be measured accurately and that the film thickness is calculated with no problem in the measurement 1 satisfying the theoretical formulas of the present invention. That is, even in the case where the aperture of the light receiving surface 6d is φ400 μm, it became clear that a thin film on the petri dish 14 can be accurately measured by the measurement device of the present invention, in which the distance between the light projecting surface 6c and the light receiving surface 6d is set to 0.8 mm and the interval between the sample 12 and the light receiving surface 6d is set to 1.2 mm on the basis of the theoretical formulas.

[Table 13]

| Device Configuration | | | | | | | | | | | | | | |
|---|---|---|---|---|---|---|---|---|---|---|---|---|---|---|
| | | | Device and Measurement Conditions | | | | | | | | | | | |
| Example No. | Experiment No. | Device Type | n1 (Air Refractive Index) | n2 (Refractive Index in Target Film Thickness) | n3 (Refractive Index of Container) | Sensor Interval 2L (mm) | Light Projecting Fiber Size D1 (mm) | Light Receiving Sensor Fiber Size D2 (mm) | Target Film Thickness d (μm) | Wavelength (μm) | Container Thickness H (mm) | Light Projection NA | Light Reception NA | Measurement Instrument-Measurement Target Film Distance h (mm) |
| Example 5 | Comparative Example 1 | Light Projection/Reception Separate Axes, 400 μm Optical Fiber F4 | 1 | 1.53 | 1.59 | 0.3 | 0.208 | 0.4 | 0.6 | 0.4 | 1 | 0.54 | 0.22 | 0.9 |
| | Measurement 1 | | 1 | 1.53 | 1.59 | 0.4 | 0.208 | 0.4 | 10 | 0.4 | 1 | 0.54 | 0.22 | 0.6 |
| | Measurement 2 | | 1 | 1.53 | 1.59 | 0.8 | 0.208 | 0.4 | 0.1 | 0.4 | 1 | 0.54 | 0.4 | 1.2 |

[Table 14]

| Measurement Results | | | | | | | | | | | | | |
|---|---|---|---|---|---|---|---|---|---|---|---|---|---|
| Example No. | Experiment No. | Device Type | Lower Limit Value of Light Projection h: Interference | Lower Limit Value of Light Reception h: Interference | Upper Limit Value of h: Back Surface Reflection | Interference Phase Difference: Within Light Receiving Surface | Determination | Note | Scope | Measurement Result of Surface Reflection Interference | | | |
| | | | Expression 1 | Expression 2 | Expression 3 | Formula 4 | Acceptance of Theoretical Formula | Reason for Rejection | Within/Outside the Present Invention | Interference Wavelength | Calculated Film Thickness | Contrast | General Evaluation |
| Example 5 | Comparative Example 1 | Light Projection/Reception Separate Axes, 400 μm Optical Fiber F4 | 0.233795838 | 0.665113549 | 0.457 | 0.354 | Not Accepted | h | Outside the Present Invention | Difficult to Measure | × | - | × to △ |
| | Comparative Example 2 | | 0.311727784 | 0.886818065 | 0.609 | 10.873 | Not Accepted | Phase Difference | Outside the Present Invention | Difficult to Measure | × | - | × |
| | Measurement | | 0.623455568 | 0.916515139 | 1.219 | 0.053 | Accepted | | Within the Present Invention | Measurement Possible | ○ | 0.027 | ○ |

Reference Signs List

| | |
|---|---|
| 1 | Measurement system |
| 2 | White light source |
| 4 | Spectroscope |
| 6 | Light transmission part |
| 6A | Light-projecting light transmission part (light projecting part) |
| 6B | Light-receiving light transmission part (light receiving part) |
| 6a | Light projecting optical fiber |
| 6b | Light receiving optical fiber |
| 6c | Light projecting surface |
| 6d | Light receiving surface |
| 8 | Controller |
| 10 | Measurement device |
| 12 | Sample |
| 14 | Petri dish |

**Claims**

1. A measurement device for measuring a sample arranged on a thick film transparent medium, the measurement device comprising:

a light source that emits white light;
a light projecting part comprising a light projecting surface for projecting the white light emitted from the light source toward the sample;
a light receiving part comprising a transmission path comprising a light receiving surface for receiving reflection interference light which is the white light, having been projected from the light projecting surface, reflected by a surface of the sample and a surface of the thick film transparent medium;
a spectroscopic part that detects intensity of light of each certain wavelength interval included in the reflection interference light received by the light receiving surface; and
a measurement part that measures the sample on the basis of the detection result of the spectroscopic part,
wherein the light projecting surface, the light receiving surface, the thick film transparent medium, and the sample are set so as to satisfy the following formula ($\alpha$) for eliminating noise light reflected from a back surface of the thick film transparent medium:

$$h < (L/n3) \cdot \sqrt{((2H/D2) \cdot (2H/D2) - n3 \cdot n3 + 1)} \cdots \text{Formula } (\alpha)$$

(in formula ($\alpha$), h denotes a distance from the light receiving surface to the sample, L denotes a half of an interval between the light projecting surface and the light receiving surface, n3 denotes a refractive index of the thick film transparent medium, H denotes a thickness of the thick film transparent medium, and D2 denotes an aperture of the light receiving surface).

2. The measurement device according to claim 1, wherein the measurement device is set to satisfy the following formulas ($\beta$) for causing reflection light, which has been incident on the sample at an incident angle less than or equal to a numerical aperture of the light projecting part and reflected at a surface of the sample, to be incident on the light receiving part at an incident angle less than or equal to a numerical aperture of the light receiving part:

$$h \geq L/\tan \beta1 \text{ and } h \geq L/\tan \beta2 \cdots \text{Formulas } (\beta)$$

(in formulas ($\beta$), $\beta1$ denotes the numerical aperture of the light projecting part, and $\beta2$ denotes the numerical aperture of the light receiving part).

3. The measurement device according to claim 1 or 2, wherein the measurement device is set to satisfy the following formula (γ) for avoiding a component having an inverted phase from entering a light beam incident on the light receiving surface:

$$|\Delta AA - \Delta BB| = 2 \times n2 \times d \times (2\pi/\lambda) \times |\cos \gamma\theta - \cos \gamma\alpha1| < \pi \cdots \text{Formula } (\gamma)$$

(in formula (γ), ΔAA denotes a phase difference of the light beam in a shortest optical path, ΔBB denotes a phase difference of the light beam in a longest optical path, n2 denotes a refractive index of the sample, d denotes a film thickness of the sample (mm), denotes a reflection angle in the sample, θ denotes a reflection angle in the shortest optical path, and α1 denotes a reflection angle in the longest optical path).

4. The measurement device according to any one of claims 1 to 3, wherein an aperture of the light receiving surface is 200 nm, the interval between the light projecting surface and the light receiving surface is 0.2 mm, and the interval between the light receiving surface and the sample is 0.5 mm or more and 0.6 mm or less.

5. The measurement device according to any one of claims 1 to 3, wherein an aperture of the light receiving surface is 200 nm, the interval between the light projecting surface and the light receiving surface is 0.3 mm or 0.4 mm, and the interval between the light receiving surface and the sample is 0.8 mm or more and 1.0 mm or less.

6. The measurement device according to any one of claims 1 to 3, wherein an aperture of the light receiving surface is 100 nm, the interval between the light projecting surface and the light receiving surface is 0.2 mm or more and 0.4 mm or less, and the interval between the light receiving surface and the sample is 1.0 mm or more and 2.0 mm or less.

7. The measurement device according to any one of claims 1 to 3, wherein an aperture of the light receiving surface is 50 nm, the interval between the light projecting surface and the light receiving surface is 0.2 mm or more and 0.4 mm or less, and the interval between the light receiving surface and the sample is 1.0 mm or more and 3.0 mm or less.

8. The measurement device according to any one of claims 1 to 7, further comprising:

a single light transmission part that accommodates the light projecting part and the light receiving part, wherein the light transmission part projects the white light from the light projecting surface of the light projecting part and receives the reflection interference light by the light receiving surface of the light receiving part.

# FIG. 1

# FIG. 2

# FIG. 3

## FIG. 4

# FIG. 5

14

(a)

14b    14a

(b)

14b

14a

# FIG. 6

20a

20c

20b

# FIG. 7

WHITE LIGHT

FIRST SAMPLE SURFACE
REFLECTION INTERFERENCE LIGHT

12

14

# FIG. 8

WHITE LIGHT

SAMPLE SURFACE
TRANSMISSION
INTERFERENCE LIGHT

12

14

# FIG. 9

WHITE LIGHT

SECOND SAMPLE
SURFACE REFLECTION
INTERFERENCE LIGHT

12

14

# FIG. 10

FIG. 11

## FIG. 12

EP 3 598 060 A1

## FIG. 13

MEASUREMENT INSTRUMENT−MEASUREMENT PLANE DISTANCE (SAMPLE: 1$\mu$m)

● LOWER LIMIT VALUE OF LIGHT PROJECTION h:
   INTERFERENCE

▲ LOWER LIMIT VALUE OF LIGHT RECEPTION h:
   INTERFERENCE

◆ UPPER LIMIT VALUE OF h:
   BACK SURFACE REFLECTION

■ INTERFERENCE PHASE DIFFERENCE:
   WITHIN LIGHT RECEIVING PLANE

## FIG. 14

LIGHT PROJECTING PART−LIGHT RECEIVING PART INTERVAL (SAMPLE: 1$\mu$m)

● LOWER LIMIT VALUE OF LIGHT PROJECTION h:
   INTERFERENCE

▲ LOWER LIMIT VALUE OF LIGHT RECEPTION h:
   INTERFERENCE

◆ UPPER LIMIT VALUE OF h:
   BACK SURFACE REFLECTION

■ INTERFERENCE PHASE DIFFERENCE:
   WITHIN LIGHT RECEIVING PLANE

# FIG. 15

INFLUENCE OF SAMPLE FILM THICKNESS
(INTERFERENCE PHASE DIFFERENCE DETERIORATION)

● LOWER LIMIT VALUE OF LIGHT PROJECTION h:
INTERFERENCE

▲ LOWER LIMIT VALUE OF LIGHT RECEPTION h:
INTERFERENCE

◆ UPPER LIMIT VALUE OF h:
BACK SURFACE REFLECTION

■ INTERFERENCE PHASE DIFFERENCE:
WITHIN LIGHT RECEIVING PLANE

# FIG. 16

APERTURE OF LIGHT PROJECTING PART (SAMPLE: 1$\mu$m)

● LOWER LIMIT VALUE OF LIGHT PROJECTION h:
INTERFERENCE

▲ LOWER LIMIT VALUE OF LIGHT RECEPTION h:
INTERFERENCE

◆ UPPER LIMIT VALUE OF h:
BACK SURFACE REFLECTION

■ INTERFERENCE PHASE DIFFERENCE:
WITHIN LIGHT RECEIVING PLANE

## FIG. 17

APERTURE OF LIGHT RECEIVING PART (SAMPLE: 1μm)

- ● LOWER LIMIT VALUE OF LIGHT PROJECTION h: INTERFERENCE
- ▲ LOWER LIMIT VALUE OF LIGHT RECEPTION h: INTERFERENCE
- ◆ UPPER LIMIT VALUE OF h: BACK SURFACE REFLECTION
- ■ INTERFERENCE PHASE DIFFERENCE: WITHIN LIGHT RECEIVING PLANE

## FIG. 18

LIGHT PROJECTING PART NA (SAMPLE: 1μm)

- ● LOWER LIMIT VALUE OF LIGHT PROJECTION h: INTERFERENCE
- ▲ LOWER LIMIT VALUE OF LIGHT RECEPTION h: INTERFERENCE
- ◆ UPPER LIMIT VALUE OF h: BACK SURFACE REFLECTION
- ■ INTERFERENCE PHASE DIFFERENCE: WITHIN LIGHT RECEIVING PLANE

## FIG. 19

LIGHT RECEIVING PART NA (SAMPLE: 1μm)

- ● LOWER LIMIT VALUE OF LIGHT PROJECTION h: INTERFERENCE
- ▲ LOWER LIMIT VALUE OF LIGHT RECEPTION h: INTERFERENCE
- ◆ UPPER LIMIT VALUE OF h: BACK SURFACE REFLECTION
- ■ INTERFERENCE PHASE DIFFERENCE: WITHIN LIGHT RECEIVING PLANE

## FIG. 20

LIGHT PROJECTION–LIGHT RECEPTION INTERVAL OF 0.3mm (SAMPLE: 1μm)

- ● LOWER LIMIT VALUE OF LIGHT PROJECTION h: INTERFERENCE
- ▲ LOWER LIMIT VALUE OF LIGHT RECEPTION h: INTERFERENCE
- ◆ UPPER LIMIT VALUE OF h: BACK SURFACE REFLECTION
- ■ INTERFERENCE PHASE DIFFERENCE: WITHIN LIGHT RECEIVING PLANE
- ▬ LOWER LIMIT VALUE (BEST) OF LIGHT RECEPTION h

## FIG. 21

LIGHT PROJECTION – LIGHT RECEPTION INTERVAL OF 0.4mm (SAMPLE: 1$\mu$m)

Legend:
- ● LOWER LIMIT VALUE OF LIGHT PROJECTION h: INTERFERENCE
- ▲ LOWER LIMIT VALUE OF LIGHT RECEPTION h: INTERFERENCE
- ◆ UPPER LIMIT VALUE OF h: BACK SURFACE REFLECTION
- ■ INTERFERENCE PHASE DIFFERENCE: WITHIN LIGHT RECEIVING PLANE
- — LOWER LIMIT VALUE (BEST) OF LIGHT RECEPTION h

Y-axis: ALLOWANCE
X-axis: APERTURE OF LIGHT RECEIVING PART

## FIG. 22

INCREASE IN SIZE OF LIGHT PROJECTING PART (SAMPLE: 1$\mu$m)

Legend:
- ● LOWER LIMIT VALUE OF LIGHT PROJECTION h: INTERFERENCE
- ▲ LOWER LIMIT VALUE OF LIGHT RECEPTION h: INTERFERENCE
- ◆ UPPER LIMIT VALUE OF h: BACK SURFACE REFLECTION
- ■ INTERFERENCE PHASE DIFFERENCE: WITHIN LIGHT RECEIVING PLANE

Y-axis: ALLOWANCE
X-axis: APERTURE OF LIGHT PROJECTING PART

# FIG. 23

INCREASE IN SIZE OF LIGHT PROJECTING PART 0.4mm – LIGHT RECEIVING PART (SAMPLE: 1μm)

● LOWER LIMIT VALUE OF LIGHT PROJECTION h: INTERFERENCE

▲ LOWER LIMIT VALUE OF LIGHT RECEPTION h: INTERFERENCE

♦ UPPER LIMIT VALUE OF h: BACK SURFACE REFLECTION

■ INTERFERENCE PHASE DIFFERENCE: WITHIN LIGHT RECEIVING PLANE

# FIG. 24

## FIG. 25

## FIG. 26

# FIG. 27

≈120mm

≈120mm

106

109

110

105

107

≈105mm

104

≈35mm

103

101

EP 3 598 060 A1

FIG. 28

EP 3 598 060 A1

## FIG. 29

## INTERNATIONAL SEARCH REPORT

| International application No. |
| --- |
| PCT/JP2018/016264 |

| A. CLASSIFICATION OF SUBJECT MATTER |
| --- |
| Int.Cl. G01B11/06(2006.01)i, G01N21/27(2006.01)i, G01N21/45(2006.01)i |
| According to International Patent Classification (IPC) or to both national classification and IPC |

| B. FIELDS SEARCHED |
| --- |

Minimum documentation searched (classification system followed by classification symbols)
Int.Cl. G01B11/06, G01N21/27, G01N21/45

| Documentation searched other than minimum documentation to the extent that such documents are included in the fields searched | |
| --- | --- |
| Published examined utility model applications of Japan | 1922-1996 |
| Published unexamined utility model applications of Japan | 1971-2018 |
| Registered utility model specifications of Japan | 1996-2018 |
| Published registered utility model applications of Japan | 1994-2018 |

Electronic data base consulted during the international search (name of data base and, where practicable, search terms used)

| C. DOCUMENTS CONSIDERED TO BE RELEVANT | | | |
| --- | --- | --- | --- |
| Category* | Citation of document, with indication, where appropriate, of the relevant passages | | Relevant to claim No. |
| Y A | WO 2015/114895 A1 (HAMAMATSU PHOTONICS K. K.) 06 August 2015, paragraphs [0007], [0023]-[0032], fig. 2-4 & US 2016/0349038 A1, paragraphs [0010], [0037]-[0046], fig. 2-4 | | 1-2, 4-8 3 |
| Y A | JP 2006-284211 A (DAINIPPON SCREEN MFG. CO., LTD.) 19 October 2006, paragraph [0017], fig. 1 & KR 10-2006-0105669 A | | 1-2, 4-8 3 |
| Y A | JP 52-57843 A (HITACHI, LTD.) 12 May 1977, page 2, lower right column, line 12 to page 3, upper left column, line 1, fig. 3 (Family: none) | | 1-2, 4-8 3 |
| Y A | JP 2010-230623 A (SHINMAYWA INDUSTRIES, LTD.) 14 October 2010, paragraphs [0038]-[0044], fig. 2 (Family: none) | | 1-2, 4-8 3 |
| Y A | JP 2005-351790 A (TORAY INDUSTRIES, INC.) 22 December 2005, paragraph [0045], fig. 13 (Family: none) | | 1-2, 4-8 3 |

| ☐ Further documents are listed in the continuation of Box C. | ☐ See patent family annex. |
| --- | --- |

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| 05 June 2018 (05.06.2018) | 19 June 2018 (19.06.2018) |

| Name and mailing address of the ISA/ Japan Patent Office 3-4-3, Kasumigaseki, Chiyoda-ku, Tokyo 100-8915, Japan | Authorized officer Telephone No. |
| --- | --- |

Form PCT/ISA/210 (second sheet) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 3786073 B

**Non-patent literature cited in the description**

- **OLYMPUS CORPORATION.** *Industrial Microscope USPM-RU III,* 18 April 2017, http://www.olympus-ims.com/ja/metrology/lens-spectral/uspm-ru3